# EUROPEAN PATENT APPLICATION

(11) **EP 0 616 469 A2**
(43) Date of publication of application: **21.09.1994**
(21) Application number: 94301844.0
(22) Date of filing: 15.03.1994
(51) Int. Cl.: H04N 7/00

(54) **Television signal processing system**

(30) Priority: 15.03.1993 JP 80143/93; 15.03.1993 JP 80144/93; 24.05.1993 JP 144280/93
(71) Applicant: VICTOR COMPANY OF JAPAN, LIMITED, Yokohama-Shi Kanagawa-Ken 221 (JP)
(72) Inventor: Ichinoi, Yutaka, Yokohama-shi, Kanagawa-ken (JP); Yamada, Hiroshi, Shinagawa-ku, Tokyo (JP)
(74) Representative: Gladwin, Philip

(57) **Abstract**

A television signal processing system (3) for performing a signal processing correspondingly to a kind of television signal determined from a number of television signals including an EDTV signal which contains a picture signal indicative of image information and an auxiliary signal related to and time-division multiplexed with the picture signal, the system comprises detection device (20) for detecting an input television signal supplied from a television signal recording and/or reproducing apparatus (1,2) and television signal processing device (103), when the detection device (20) detects the television signal supplied from the television signal recording and reproducing apparatus (1,2), the processing device (103) processes only an EDTV signal containing the base-band auxiliary signal as EDTV signal and, when the detection device (20) detects the video signal as supplied from other source than the television signal recording and reproducing apparatus (1,2), the processing device (103) processes only an EDTV signal containing a modulated or encoded auxiliary signal as an EDTV signal. A television signal processing system (3) is capable of receiving an EDTV signal composed of a picture signal indicative of an image information and two auxiliary signals time-division multiplexed with the picture signal and comprises a signal configuration identification circuit (111) for producing an identification signal obtained by identification signal configuration of various video signals which include the EDTV signal and are to be received and an interpolation circuit (105) for outputting an enhanced video signal obtained by enhancing the picture signal when the identification signal indicates the EDTV signal.

## Description

### BACKGROUND OF THE INVENTION

### Field of the Invention

The present invention relates to a television signal processing system.

### Description of the Prior Art

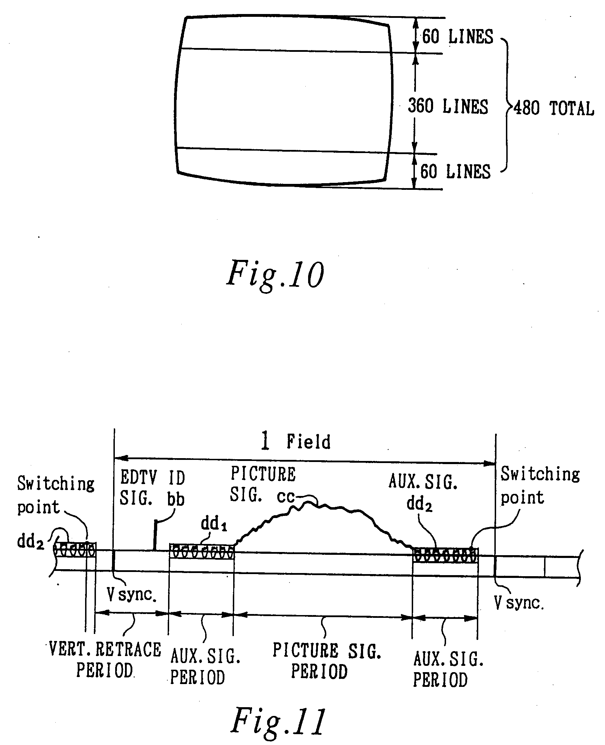

Prior arts will be described with reference to Fig. 10 which explains an image of a letter box system and Fig. 11 which shows a signal configuration of the EDTV (Extended Definition Television) system.

A transmission system for transmitting a high quality image having a display screen aspect ratio of 16 : 9, which is compatible with a conventional television receiver having a screen aspect ratio of 4 : 3, has been studied. One of such transmission system is the so-called letter box system in which, when an image is displayed on a screen of a conventional television receiver, black portions are displayed on an upper region and a lower region of the screen and the image information is displayed on a vertical center with an aspect ratio of 16 : 9, as shown in Fig. 10 and, when it is displayed on a screen of an EDTV receiver which is capable of reproducing the image having an aspect ratio of 16 : 9 with filling the same aspect ratio screen, two auxiliary signals dd1 and dd2 corresponding to two vertical high frequency components or two horizontal high frequency components or a vertical high frequency component and a horizontal high frequency component are transmitted in periods corresponding to the black portions of the screen. In Fig. 11, cc indicates a picture signal of image information. As the auxiliary signals dd1 and dd2, signals have been considered which are the so-called VSB-modulated (vestigial side band modulation) signal
obtained by restricting a carrier or signals obtained by digital encoding. These signals are illustrated in Fig. 11 and will be referred to as the EDTV signal hereinafter. In order to identify such EDTV signal, an EDTV identification signal bb is inserted into a predetermined scanning line within a vertical blanking period as shown in Fig. 11.

An example of such EDTV signal is the "PAL plus" system which is under consideration in Europe.

When such EDTV signal is to be recorded and reproduced in a conventional magnetic video signal recording and reproducing apparatus (referred to as "VTR" hereinafter), it pauses a problem that the auxiliary signals dd1 and dd2 of the EDTV signal can not be decoded by a decoder for obtaining high quality image due to the following problems (1) to (3) for reasons that in such a conventional VTR, the input EDTV signal is simply regarded as a normal TV signal thus is not properly processed therein.
(1) The auxiliary signals dd1 and dd2 are not always having line correlation and thus a portion of the auxiliary signals dd1 and dd2 having no line correlation is removed by a comb filter provided for for separating a luminance (Y) signal and a color signal. Therefore, a degradation of the auxiliary signal dd1 and dd2 at an output of the comb filter may occur.
(2) When the auxiliary signals dd1 and dd2 are VSB (Vestigial Side Band) modulated signals, it is necessary, in reproducing operation, to reproduce a carrier tracking a jitter frequency caused and contained in a video signal reproduced from the conventional VTR. Therefore, it is impossible to accurately reproduce the VSB modulated signal without using a complicated time base correction. Further, since VSB modulated signal usually requires a wide band transmission system capable of transmitting a high frequency carrier, it is impossible to accurately record and reproduce it unless a wide band VTR is used.
(3) When the auxiliary signals dd1 and dd2 are digitally encoded signals, an error correction code attaching circuit and an error correction circuit are necessary in recording and reproducing such signals. Further, since it is necessary to reproduce a clock signal for decoding purpose, such VTR must become complicated.

In order to solve the problems (1) to (3), Japanese Patent Application 4-30146/1992 titled "Magnetic Video Signal Recording Apparatus" and assigned to the same assignee of the present application proposes a VTR for recording a video signal containing a time-division multiplexed picture signal representing an image information and an auxiliary signal related to the picture signal, which comprises a first filter for separating a luminance signal from the video signal, a demodulator for converting the auxiliary signal into a base-band without passing the first filter, a luminance signal recording circuit which FM-modulates an output of the demodulator when at least the auxiliary signal is present, otherwise FM modulates the luminance signal, second filter for separating a color signal from the video signal and a color signal recording circuit for converting the color signal into a frequency range lower than that of the luminance signal, whereby the output of the luminance signal recording circuit and the output of the color signal recording circuit are frequency-multiplexed and recorded.

A VTR which includes a recording portion performing the same recording signal processing as performed in the recording system of the just mentioned conventional VTR and a reproducing portion performing, in a reproducing mode, a signal reproducing processing complementary to the signal recording processing and performs a recording and reproducing processing compatible with the EDTV signal will be referred to as the "improved VTR" hereinafter.

Further, unlike the just mentioned "improved VTR, a conventional VTR which can not perform on the EDTV signal properly, but operates without discriminating the EDTV signal from a conventional 4:3 aspect ratio TV signal will be referred to as the "conventional VTR" hereinafter.

In case where such improved VTR or conventional VTR is connected to an EDTV compatible receiver (referred to as "EDTV receiver" hereinafter), an auxiliary signal processing circuit in the EDTV receiver may perform an erroneous operation as such that the already demodulated base band auxiliary signal reproduced from the improved VTR, is redundantly demodulated resulting in that an image quality is degraded, unless the connected EDTV receiver identifies whether the currently receiving signal is recorded by the improved VTR or by the conventional VTR and processes the signal properly.

In the present specification, the term "base band auxiliary signal" means the auxiliary signal which is not modulated in a carrier but resides in the base band region shared with the video (picture) signal before transmitting them for broadcasting.

### SUMMARY OF THE INVENTION

In order to improve the problems mentioned hereinbefore, the present invention provides a television signal processing system which has the following features.

A television signal processing system for performing a signal processing correspondingly to a kind of video signal determined from a number of video signals including an EDTV signal which contains a picture signal indicative of image information and an auxiliary signal related to and time-division multiplexed with the picture signal, the system comprising: detection means for detecting an input video signal supplied from a video signal recording and/or reproducing apparatus such as a video signal recording apparatus, a video signal reproducing apparatus or a video signal recording and reproducing apparatus, which is a recording and reproducing system of a VTR including a recording section and a reproducing section; and video signal processing means, for processing only an EDTV signal containing the base-band auxiliary signal as EDTV signal when the detection means detects the video signal supplied from the VTR, and for processing only an EDTV signal containing a modulated or encoded auxiliary signal as an EDTV signal when the detection means detects the video signal as supplied from other source than the VTR.

### BRIEF DESCRIPTION OF THE DRAWINGS

Fig. 1 shows connections between an improved VTR and an EDTV receiver;
Figs. 2(A) and 2(B) show a signal format indicating positions of an identification signal for identifying an EDTV signal and a reference level, respectively;
Fig. 3 is a block diagram showing an embodiment of an extracting circuit for extracting the identification signal and the reference level;
Fig. 4 is a block diagram showing an embodiment of a PLL circuit constituting the extracting circuit;
Fig. 5 is a block diagram of an embodiment of a recording section of an improved VTR;
Fig. 6 is a block diagram of an embodiment of a reproducing section of the improved VTR;
Fig. 7 shows a feed of an identification signal for identifying a base-band auxiliary signal between the improved VTR and the EDTV receiver;
Fig. 8 shows signal waveforms for explaining an identifying operation of the base-band auxiliary signal between the improved VTR and the EDTV receiver;
Fig. 9 is a table indicating an operation of the recording section of the improved VTR;
Fig. 10 is an illustration of a screen for explaining the letter box system;
Fig. 11 is a signal format of the EDTV signal;
Fig. 12 is a block diagram of an embodiment of a video signal processing circuit which is a main portion of a television receiver according to the present invention;
Fig. 13 is a flow chart showing an operation of identifying EDTV signal configuration which is performed by an EDTV signal configuration identification circuit 11;
Fig. 14 is a time chart showing a relation between the EDTV signal, a switching control signal and a sample-hold signal ff;
Fig. 15 is a table showing a relation between a supply of switching control signal to switches SW11 to SW13 and supply of an operation control signal to an interpolation circuit 5 which are performed by a switching pulse generating circuit 108;
Fig. 16 is a signal format of an encoded video signal transmitted by a video signal transmission method according to the present invention;
Fig. 17 is a block diagram of a color signal reproducing system of a conventional VTR;
Fig. 18 is a block diagram of a cross talk removing circuit;
Fig. 19 shows signal waveforms of video signal recorded and reproduced by a conventional VTR;
Fig. 20 is a block diagram showing a detection circuit of a TV receiver, for detecting a high definition video identification signal;
Figs. 21 (A) to 21(E) illustrate an image reproduced by the PAL plus system;
Fig. 22 is a basic encoding algorithm of PAL plus system;
Fig. 23 is a basic decoding algorithm of PAL plus system;
Fig. 24 shows waveforms of displayed pictures; and
Fig. 25 shows a displayed picture pattern.

### DETAILED DESCRIPTION OF THE PREFERRED EMBODIMENTS

### [First Embodiment]

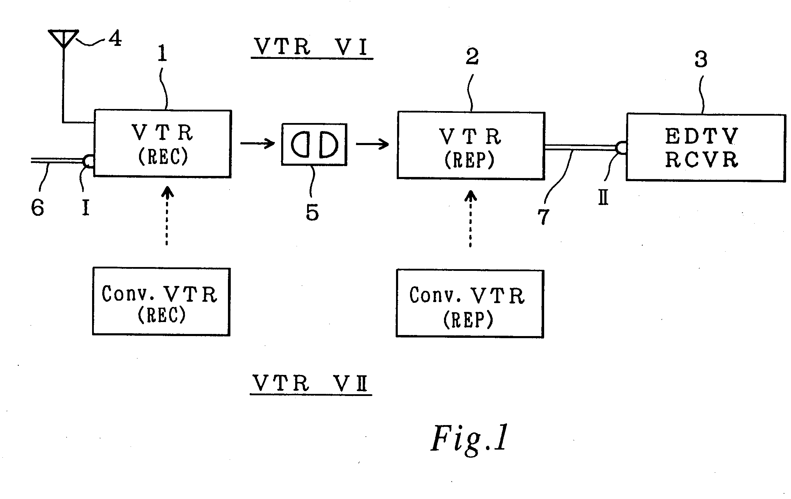

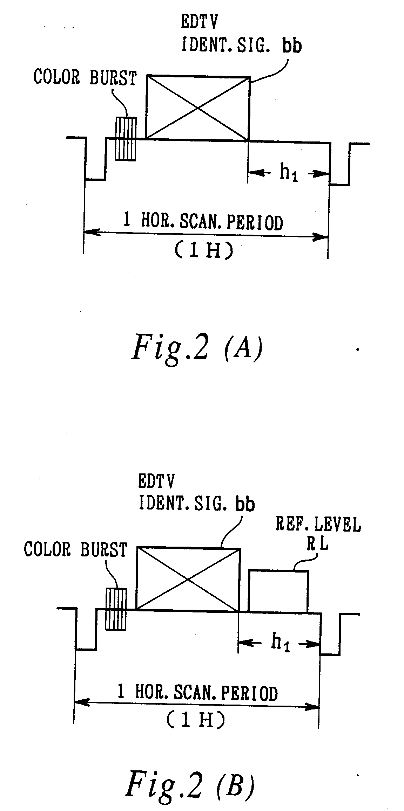

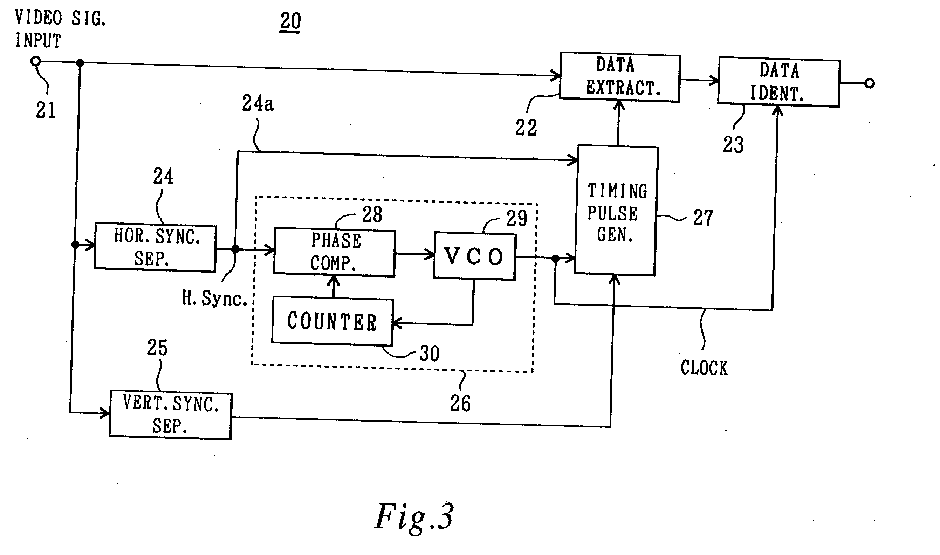

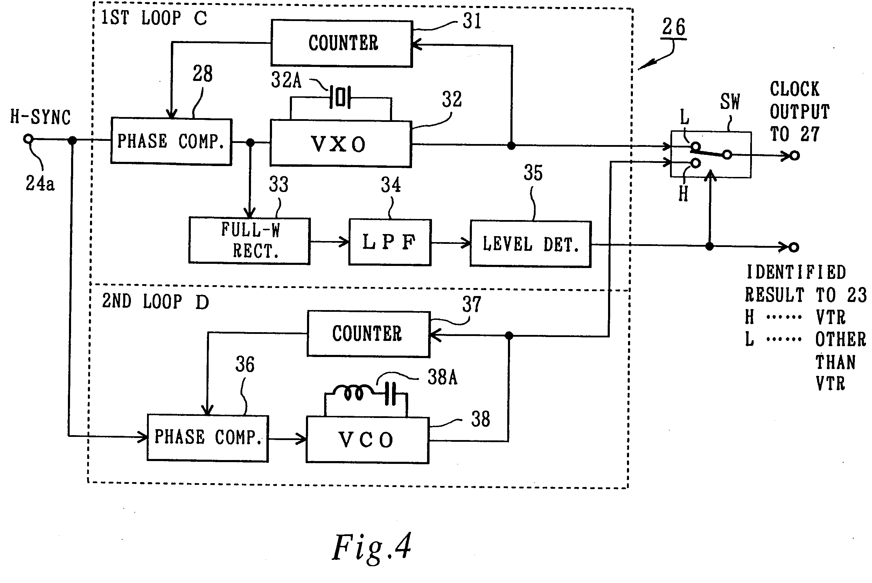

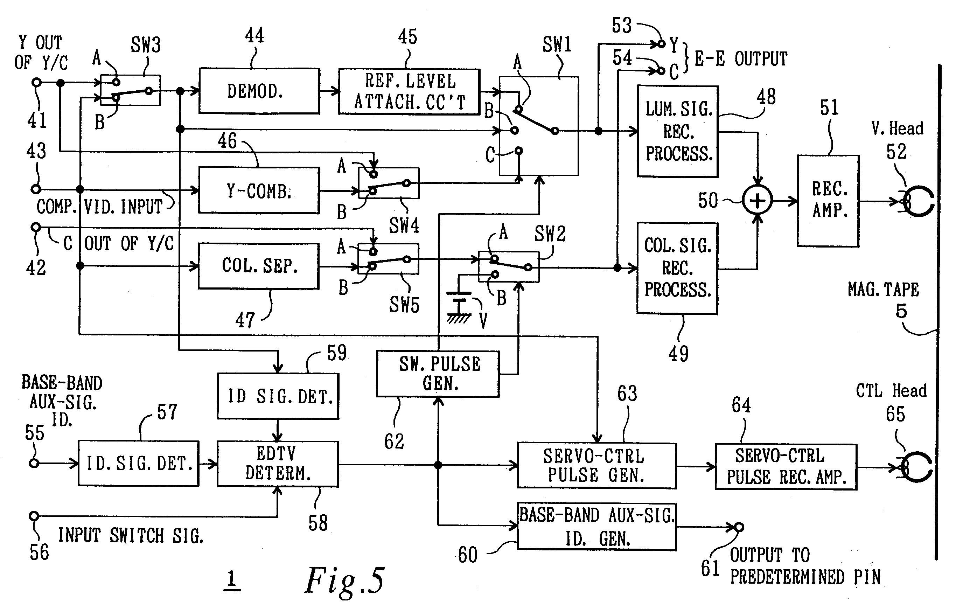

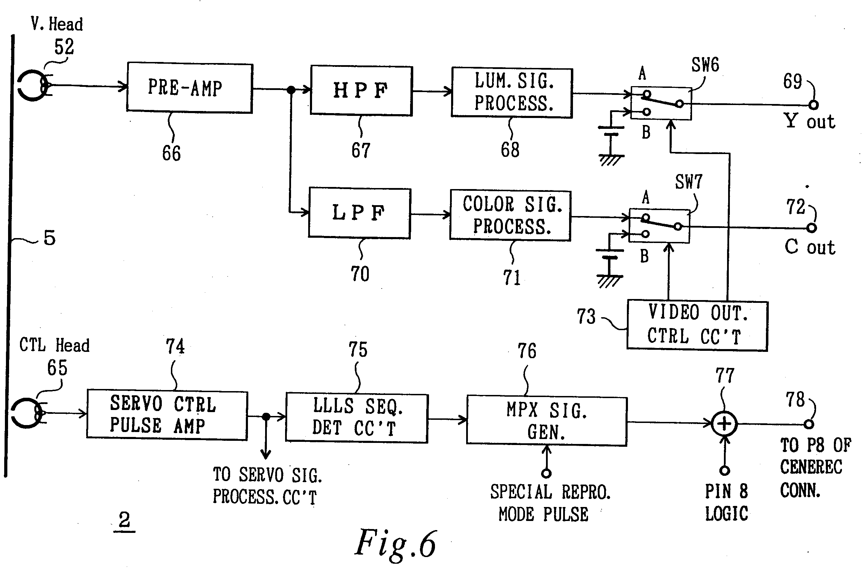

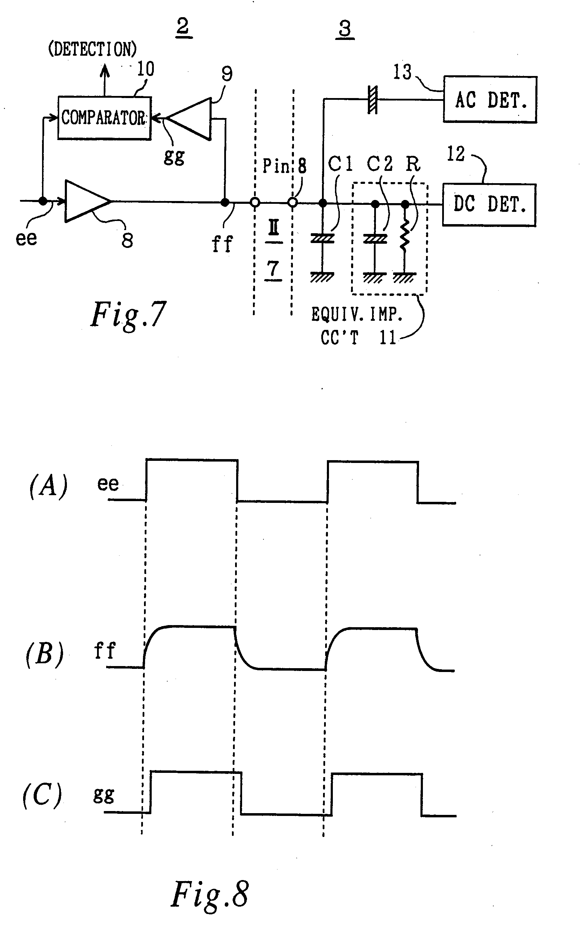

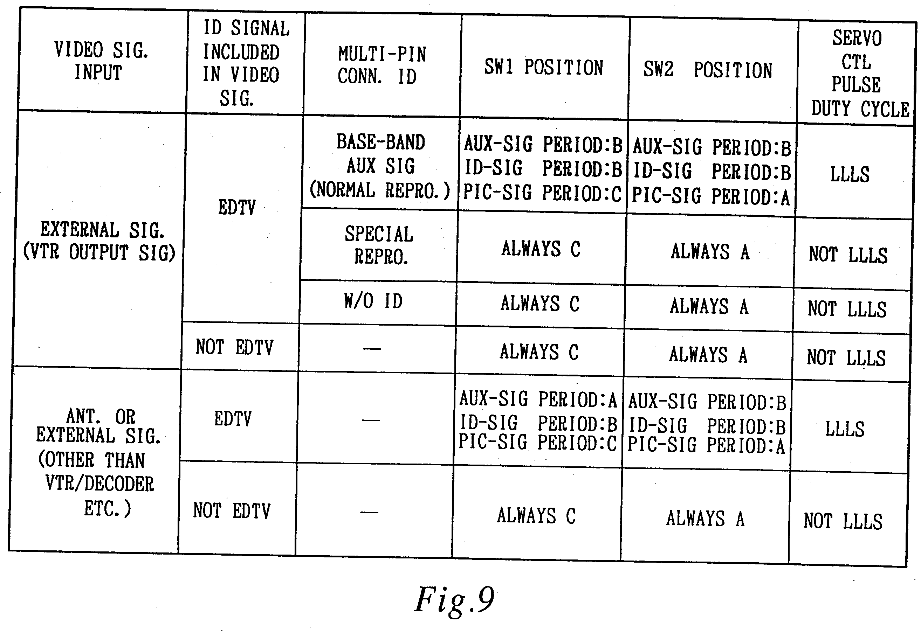

A video signal processing apparatus according to the present invention will be described with reference to Figs. 1 to 9. Fig. 1 shows connections between an "improved VTR" and an EDTV receiver, Figs. 2(A) and 2(B) show a signal format indicating positions of an identification signal for identifying an EDTV signal and a reference level, respectively, Fig. 3 is a block diagram showing an embodiment of an extracting circuit for extracting the identification signal and the reference level, Fig. 4 is a block diagram showing an embodiment of a PLL circuit constituting the extracting circuit, Fig. 5 is a block diagram of an embodiment of a recording section of an "improved VTR", Fig. 6 is a block diagram of an embodiment of a reproducing section of the improved VTR, Fig. 7 shows a feed of an identification signal for discriminating a base-band auxiliary signal between the improved VTR and the EDTV receiver, Fig. 8 shows signal waveforms for explaining a discriminating operation of the base-band auxiliary signal between the improved VTR and the EDTV receiver and Fig. 9 is a table indicating an operation of the recording section of the improved VTR.

First, a transmission of a video image between an "improved VTR" and an EDTV receiver will be described. In Fig. 1. 1 denotes a recording section of the improved VTR VI which is a video signal magnetic recording and reproducing apparatus for performing an EDTV signal compatible recording and reproducing operation, 2 a reproducing section of the improved VTR VI, 3 the EDTV receiver including an auxiliary signal processing circuit and performing an EDTV compatible receiving processing, 4 an antenna for receiving VHF, UHF and satellite broadcast, 5 a magnetic tape loaded in a tape cassette and 6 and 7 connecting cables for video signal transmission.

An input video signal to the recording section 1 of the improved VTR VI includes an antenna inputted video signal which is received by the antenna 4 and detected a tuner which is not shown and an external video signal supplied from a video apparatus, etc., which is not shown and, for example, another "improved VTR" VI or the "conventional VTR" VII, through the connecting cable 6 and a connector I. The recording section 1 selects one of the input video signals by a video selector switch which is not shown and records it on the magnetic tape 5 together with an audio signal. The video signal and the audio signal recorded on the magnetic tape 5 are reproduced by the reproducing section 2 of the "improved VTR" VI. The reproduced video and audio signals are supplied through the connecting cable 7 and a connector II to the EDTV receiver 3 in which they become a reproduced video and audio outputs. The connector II supplying various information signals including video and audio signals, etc., to the EDTV receiver 3 may be a multi-pin connector such as 21-pin connector which is used widely in Europe.

Problems caused by the use of the connector II will be discussed. When an apparatus to be connected to the EDTV receiver 3 through the connecting cable 7 and the connector II is a video tape recorder which is one of the "improved VTR" VI and the "conventional VTR" VII, the following problems are considered.
Case (1); The EDTV signal is recorded and reproduced by the "improved VTR" VI: A reproduced signal from the "improved VTR" VI contains a base-band auxiliary signal which is demodulated. Thus, the EDTV receiver 3 receives a composite video signal which is obtained by combining the base-band auxiliary signal and a picture signal and displays a picture image related to the picture signal whose image quality is improved, as a full size image filling a screen having an aspect ratio of 16 : 9.
Case (2); The EDTV signal is recorded and reproduced by a "conventional VTR" VII: A reproduced signal from the conventional VTR VII is a conventional style TV signal containing the EDTV's auxiliary signal still modulated or encoded since there is no recording and reproducing processing for the EDTV signal taking place in the conventional VTR VII. Therefore, the EDTV receiver 3 displays a picture image based on this unprocessed signal as a full size image. That is, the picture portion having the aspect ratio of 16 : 9 is fully displayed on the screen but without improvement in image quality.
Case (3); The EDTV signal is recorded by the "conventional VTR" VII and reproduced by the "improved VTR" VI: The conventional style TV signal including the EDTV's auxiliary signal which is still modulated or encoded is reproduced by the improved VTR VI where a proper demodulation or decoding of the auxiliary signal contained in the reproduced signal can not be guaranteed. Thus, the EDTV receiver 3 displays a picture image based on this not properly demodulated signal as a full size image.
   In the cases (1) to (3) mentioned above, the external apparatus to be connected to the EDTV receiver 3 with the connecting cable 7 and the connector II is a VTR. However, there may be cases where other video apparatus than VTR such as descrambler may be connected to the EDTV receiver 3.
Case (4); An EDTV signal is directly supplied to the EDTV receiver: The EDTV receiver 3 demodulates or decodes the EDTV signal which is supplied from the descrambler and whose auxiliary signal is modulated or encoded. Thus, the EDTV receiver 3 displays an enhanced picture image whose quality is improved by enhancement using the base-band auxiliary signal and the picture signal as a full size image.

As mentioned in the cases (1) to (4), the EDTV receiver 3 must perform complicated receiving signal processing correspondingly to an apparatus connected thereto with the connecting cable 7 and the connector 11. It is conceivable, however, to provide a video signal processing system which has no confusion in any of these cases, by employing any of the following methods (A) to (C).

### Method (A): Use of "VTR Exclusive Connector"

When a VTR is to be connected to the EDTV receiver 3 with the connecting cable 7 and the connector 11, the latter connector is replaced by a connector separately and exclusively provided to a VTR. Only when a video signal supplied through the "VTR exclusive connector" to the EDTV receiver 3, is determined to have a base-band auxiliary signal, it is made possible to present an enhanced picture by enhancing the picture signal with the base-band auxiliary signal so that an improved quality image is displayed on the EDTV receiver 3 as a full size image. When a video signal supplied through the VTR exclusive connector to the EDTV receiver 3 is determined to have no base-band auxiliary signal, the EDTV receiver 3 displays a full size image of only the picture signal without the enhancement.

In this case, in order to avoid a confusion with other universal multi-pin connectors having the same construction as that of the "VTR exclusive connector", the latter shall be colored with other color than that of such multi-pin connectors so that the VTR exclusive connector can be distinguished from others.

### Method (B): Use of "Connector Application Change Switch"

Instead of separately providing such a VTR exclusive connector in the method (A), the connector II is used as it is together with a changeover switch for switching pin connections of the connector II for connecting a VTR and for connecting other devices than the VTR, the changeover switch may be provided on the connector II or on the input side of the EDTV receiver 3. With the provision of the changeover switch, the same function as in the method (A) can be obtained. In practice, the output signal of VTR is fed to an formerly unused spare pin of the conventional connector through a cable provided for the purpose, the fed signal is selectively supplied to to the EDTV signal processing circuit by the changeover switch.

By preliminary select this switch to the VTR connection, a video signal which is supplied through the connecting cable 7 to the connector II and fed to the EDTV receiver 3 after the appropriate processings, produces an enhanced picture of improved picture quality in full size on the screen having the picture signal enhanced with the base-band auxiliary signal when the base-band auxiliary signal is identified to be present. When the signal supplied to the connector II is determined as having no base-band auxiliary signal, the EDTV receiver 3 displays only the picture signal as a full size image without the enhancement. Alternatively, the switch can be provided to the connector I for selectively switching its spare pins.

### Method (C): Detection of "VTR Reproduced Signal"

The connector II can be regarded as the "VTR exclusive connector", if a video signal supplied through the connecting cable 7 and the connector II, is detected to be "reproduced from VTRs" or "from other apparatuses than VTRs" by examining the features of the supplied video signal according to any of the methods to be described later.

By detecting the "VTR reproduced signal" in the foregoing manners, the display of image of degraded quality on the EDTV receiver 3 due to the improper or not guaranteed demodulation or decoding of the auxiliary signal in such as the cases (2) and (3) mentioned previously, can be prevented.

Following first to third methods for discriminating the base-band auxiliary signal, which is to be used in the previously mentioned Method (A) "Use of VTR Exclusive Connector, will be described.

### [First Method]

A spare pin of the multi-pin connector II, which is formerly not used, such as the tenth pin of a multi-pin connector of European CENELEC standard, is used for receiving the base-band auxiliary signal identification signal. When a level at this pin is in "H", a video signal supplied to the EDTV receiver 3 through the connector II is regarded as a video signal reproduced by a VTR and having the base-band auxiliary signal. This case corresponds to the case (1) mentioned previously.

When this pin is in "L" level, a video signal supplied to the EDTV receiver 3 through the connector II is regarded as a video signal reproduced by a VTR and having no base-band auxiliary signal. This case corresponds to the cases (2) and (3) mentioned previously.

Further, it is possible to superimpose a "VTR Special Reproduction Identification Signal" to be described later on the base-band auxiliary signal identification signal supplied to the pin which is prepared for receiving the "Base Band Auxiliary Signal Identification Signal". That is, in the cases (1) to (3) and when the reproducing mode of the VTR is a special mode such as "still", "slow" or "search", a level of the "base band auxiliary signal identification signal" is defined to be 1/2 "H" instead of 1 "H" which is present with the "base band auxiliary signal identification signal" only (without the special mode).

Thus, when the level of the pin for receiving the base band auxiliary signal identification signal is 1/2 "H" level, it is possible to signal the EDTV receiver 3 that a video signal inputted from a VTR to the EDTV receiver 3 through the connector II is a signal having a base band auxiliary signal and reproduced in a special mode.

However, a waveform of the signal reproduced in the special reproduction mode is different from that of the EDTV signal of normal reproduction, and it is impossible to extract the EDTV identification signal bb at its normal level from the EDTV signal. Therefore, a correct signal processing for enhancing the picture signal with the auxiliary signal, can not be expected.

Beside this problem, when the EDTV identification signal bb is used to identify a transmission system in which, unlike transmitting a vertically center picture image portion of the screen as shown in Fig. 10, an upper half of a picture image is transmitted in 360 lines, and a blank portion (or auxiliary signal) in a lower half of the picture image in 120 lines, in case of identifying this kind of system, it may become not possible to extract the EDTV identification signal bb on the side of the EDTV receiver 3 during the special reproduction.

According to the present invention, the degradation problem of the quality of an image reproduced in the special reproduction mode, which is caused by the inability of extracting the EDTV identification signal bb on the side of the EDTV receiver 3, can be solved, by interrupting the picture signal enhancement operation in the EDTV receiver 3, instead, displaying the picture received before the special reproduction has started when the EDTV receiver 3 identifies that the level of the pin for receiving the "base band auxiliary signal identification signal" is 1/2 "H".

The above mentioned method for superimposing the "VTR special reproduction identification signal" on the base band auxiliary signal identification signal supplied to the pin for receiving the "base band auxiliary signal identification signal", effectively utilizes a formerly not used spare pin of the connector. However, when such spare pin of the "VTR exclusive connector" is to be used for another purpose, which includes a case where the "VTR special reproduction identification signal" is in a form of TTL logic for the purpose of prevention of damage on the side of the EDTV receiver 3 due to an erroneous connection. In such a case, the pin receives either "H" level or "L" level. In this case, the level can be made to 1/2 of the "base band auxiliary signal identification signal" similar to the "VTR special reproduction signal" by using an alternating signal (A.C. signal) alternating between the "H" level and the "L" level with a predetermined repetitive period as the "VTR special reproduction signal" and filtering it through a low pass filter which is not shown. Accordingly, it is made possible to supply the "VTR special reproduction signal" to the EDTV receiver 3.

By making the alternating period of the alternating signal to an integer multiple of one of the scanning line period, the field or frame period of the reproduced VTR video signal and placing the switching point between the"H" and "L" levels within a horizontal retrace period or a vertical retrace period of the reproduced video signal, it is possible to prevent a disturbed picture display (degradation of image quality) in the EDTV receiver 3 due to mixing of the alternating signal in the video signal (that is, during the auxiliary signal period and the picture signal period of the waveform) from occurring.

### [Second Method]

In case that supplying a DC signal to a specific pin (the eighth pin) of the multi-pin connector II of the European CENELEC standard is defined, as an industry standard, for a different purpose than above, an AC signal having a smaller level than that of the signal for such different purpose may further be superimposed thereto with an arrangement that a reproduced video signal supplied from a VTR to an EDTV receiver 3 through the connector II is determined as having no base band auxiliary signal when the smaller level AC signal above is not superimposed, and when superimposed, the reproduced video signal is determined as having base band auxiliary signal.

And, judging from a configuration (such as period, duty cycle, etc.) of this AC signal, whether the video signal having base band auxiliary signal is reproduced in a normal reproduction mode or a special reproduction mode, is determined. For example, it may be possible to correspond the normal reproduction of the video signal having base band auxiliary signal to a square wave whose level changes every line and the special reproduction thereof to a square wave whose level changes every 2 lines.

In this method, by making the alternating period of the smaller level AC signal alternating its "H" and "L" levels to a predetermined period which is an integer multiple of one of the (scanning) line period, the field or frame period of the reproduced VTR video signal, and placing the switching point between the "H" level and the "L" level within the horizontal retrace period or the vertical retrace period of the reproduced video signal as in the first method, it is possible to prevent a disturbed picture display (degradation of image quality) in the EDTV receiver 3 due to mixing of the alternating signal in the video signal (that is, during the auxiliary signal period and the picture signal period in the waveform) from occurring.

In the above mentioned first and second methods, it is inevitable to detect and supply the information of fact that the currently reproducing video signal from a VTR contains the "base band auxiliary signal" to the predetermined pin (the eighth pin) of the multi-pin connector, that is, the "base band auxiliary signal identification signal" is supplied.

An example of this method is disclosed in the Japanese Patent Application 3-360624/1991 entitled "Video Signal Transmission Input and/or Output Device" and assigned to the assignee of the present application. In this disclosed technology, in order to maintain a compatibility with the so-called VISS (Video Index Search System) and VASS (Video Address Search System) systems used in a VTR of VHS system. a control signal including a pulse having a duty cycle of 62.5 % used as 1 bit of "L" = L level and a pulse having a duty cycle of 57.5 % used as 1 bit of "S" = H level is used and a group of 4 bits "L", "L", "L", "S" of this control signal is used as an identifying information. Alternatively, a control signal including a pulse having a duty cycle of 30 % used as 1 bit of "L" = L level and a pulse having duty cycle of 25 % used as 1 bit of "S" = H level is used and a group of 4 bits "L", "L", "L", "S" of this control signal is used as an identifying information. Such identification system is referred generally to as "LLLS". When this "LLLS" is present, an EDTV signal is regarded as having the base band auxiliary signal.

Therefore, it is conceivable to insert the "LLLS" information indicative of a base band auxiliary signal recorded into other portion (for example, a control track) of a magnetic tape 5 than video tracks by utilizing a modulation pattern of duty cycle of a servo control signal for recording and on the side of the VTR, detecting the "LLLS" information reproduced together with the video signal during the reproduction. The previously mentioned AC signal may be realized as a signal obtained by adjusting level of this servo control signal.

### [Third Method]

As a method of identifying a base band auxiliary signal, there is one in which a feature of a base band EDTV identification signal bb inserted into a video signal or a feature of video signal containing a base band auxiliary-signal, is utilized.

It is assumed as shown in Fig. 2(A) that an EDTV identification signal bb indicating an EDTV signal and followed by a predetermined blank period h1 is inserted into a rearward portion of 1 line (for example, 23rd horizontal line of a television broadcasting system of 625 lines/50 fields) within a vertical retrace period. On the other hand, when auxiliary signals dd1 and dd2 are inserted into a base band, it is necessary to provide a "reference level RL" which is a reference for a DC level of- the base band auxiliary signal within the vertical retrace period.

By inserting the reference level RL within the blank period h1 following the EDTV identification signal bb as shown in Fig. 2(B), it is possible to insert both the EDTV identification signal bb and the reference level RL in the same line (23rd line). In order to identify the base band auxiliary signal on the side of the VTR based on the EDTV identification signal bb and the reference level RL extracted from the video signal, it is enough to detect 1 line (for example, 23rd line) within the vertical retrace period. Therefore, a construction of an extractor circuit (to be described with reference to Fig. 3) for extracting the identification signal and the reference level, can be made simple. Although not described in detail, the reference level RL may be inserted into a different line from that into which the EDTV identification signal bb is inserted.

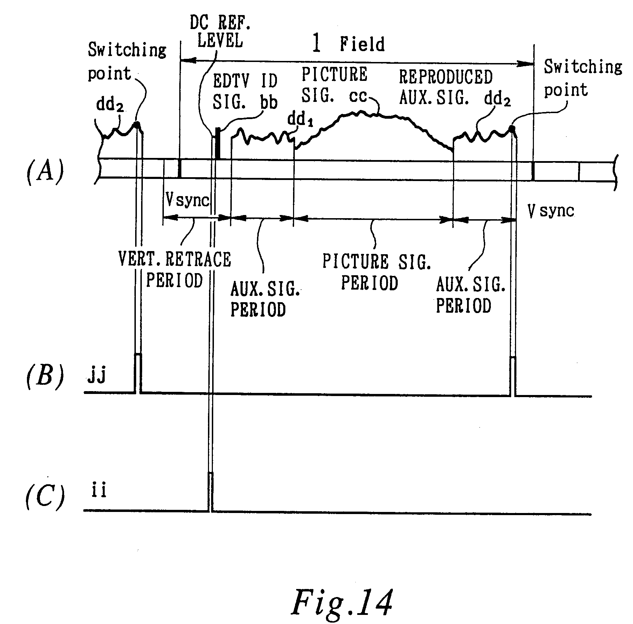

The EDTV identification signal bb is not always necessary to have a "bit" indicative of an EDTV signal. For example, when the auxiliary signal is VSB-modulated, provision of only one bit indicative of the letter box picture having a 16 : 9 aspect ratio, is sufficient. In the EDTV format, the period corresponding to the auxiliary signal period, is generally a constant black level when there is no auxiliary signal. Therefore, when such signal having no signal component in the auxiliary signal period, is demodulated, the demodulated signal exhibits simply a reference level RL (refer to Fig. 14). Thus, when the picture signal cc is enhanced with such an auxiliary signal of reference level only, the resultant enhanced picture will be substantially same as the picture signal cc, in other words, there will be no degradation of image quality due to such enhancement.

When only an information concerning the letter box system for displaying an image having aspect ratio of 16 : 9 is transmitted and is detected by the EDTV receiver 3, the latter may have a construction for performing the above mentioned enhancement. The information indicating the letter box system for displaying an image having aspect ratio of 16 : 9 is regarded, here, as an auxiliary signal identification signal.

Since the reference level RL is required for the base band auxiliary signal, the reference level RL is added to the video signal when the auxiliary signal is recorded in the form of base band signal.

On the other hand, in case of a video signal having a modulated auxiliary signal, a DC level in the period corresponding to the reference level RL, is a black level. Therefore, it is possible to identify an input video signal as having a base band auxiliary signal by detecting a presence of the reference level RL in this period.

Accordingly, the EDTV receiver 3 can be designed to recognize the presence of the base band auxiliary signal in the input video signal having the condition that the EDTV signal is identified by the EDTV identification signal bb and the base band auxiliary signal is detected in the above method. It may be possible to perform this discriminating operation in a reproducing system of a VTR so as to control the predetermined pin of the multi-pin connector according to the first method or the second method. Comparing this with the case in which the servo control signal is used, an extractor circuit for extracting the EDTV identification signal bb is necessary in the reproducing system (particularly, in an apparatus which is compatible with a base band auxiliary signal only during reproduction, such circuit has to be newly added since extraction of the EDTV identification signal bb during recording is unnecessary).

Comparing the first to third methods, the third method is advantageous in that, since a reproduced signal from a VTR is detected on the basis of features of an input video signal by utilizing the features of the video signal having the EDTV identification signal bb and the base band auxiliary signal, there is no need of use of other pins of a multi-pin connector than that for video signal.

However, the first and second methods are advantageous over the third method in that, since, in the third method, the EDTV identification signal bb and the reference level RL are liable to be partially dropped out or become low levels when signal dropouts occur in a reproduced signal of VTR or when the special reproduction of the VTR is- performed. In such a case, detection of the EDTV identification signal bb and the reference level RL become uncertain.

Therefore, it may be possible to arrange that the ID detection (that is, detection of the "base band auxiliary signal identification signal" and the "VTR special reproduction identification signal") is performed on the signal supplied to a predetermined pin of a multi-pin connector according to the first or second method, and the input video signal is regarded as an EDTV signal when ID is detected.

When no ID is detected, the reference level RL is detected according to the third method. When it is determined that a base band auxiliary signal is included, the input video signal is processed as an EDTV signal and, otherwise, it is not processed as an EDTV signal.

Further, the second method has a feature that a receiver 3 currently connected to a reproducing section 2 of the previously mentioned improved VTR VI can be distinguished. as will be described below. That is, an input capacitance of the EDTV receiver 3 connected to the 8th pin of the multi-pin connector according to the previously mentioned CENELEC standard is increased. A capacitance (for example, in the order of 0.03 µF to 0.1 µF which is substantially larger than 220 pF) is added to the 8th pin of the multi-pin connector whose input capacitance is not larger than 220 pF according to the CENELEC standard.

Thus, the reproducing section 2 of the improved VTR VI is connected to the EDTV receiver 3 through the connecting cable 7 and the connector which is a multi-pin connector according to the CENELEC standard as shown in Fig. 7. With this connection, the reproducing section 2 of the improved VTR VI outputs, when it reproduces a video signal having a base band auxiliary signal, a base band auxiliary signal identification signal ee which is a square wave as shown in Fig. 8(A). The signal ee is supplied to an input of the EDTV receiver 3 connected to the 8th pin of a connector B through a buffer 8 and the connecting cable 7 and its transient response is changed by a capacitance (added capacitance) of an equivalence input impedance circuit 11 connected in the signal path to a DC detection circuit 12 after a capacitor C1 having a standard input capacitance of 220 pF, resulting in a signal ff (shown in Fig. 8(B)) having largely delayed leading and trailing edges. The DC detection circuit 12 is for detecting a DC identification signal on the side of the EDTV receiver 3 and 13 denotes an AC/DC detection circuit for detecting the previously mentioned alternating identification signal on the side of the EDTV receiver 3. A signal gg (shown in Fig. 8(C)) obtained by waveform-shaping the signal ff by a buffer 9, is practically the signal ee delayed by a certain time. A comparator 10 compares an amount of the delay (phase difference) of the signal gg supplied from the EDTV receiver 3 with respect to the signal ee outputted from the reproducing section 2 of the improved VTR VI and determines that the receiver connected to the reproducing section 2 of the improved VTR VI is as an EDTV receiver by outputting to an unshown receiver identification circuit a detection signal indicative of the delay of the signal gg with respect to the signal ee.

When the receiver connected to the reproducing section 2 of the improved VTR VI is not an EDTV compatible receiver but a usual TV receiver which has no such equivalence input impedance circuit 11 as included in the EDTV receiver, a signal at an output of the buffer 8 is the signal ee since it is not subject to the change of the transient response due to addition of the capacitance even when the signal ee is supplied to the receiver connected to the 8th pin of the connector B through the buffer 8 and the connecting cable 7. Thus, the comparator 10 does not output the detection signal to the unshown receiver identification circuit, by which it can be determined that the receiver connected to the reproducing section 2 of the improved VTR VI is a usual TV receiver. Although the duty cycle is varied by the signal ff in performing the above mentioned detecting operation, it does not affect the detection of the AC level.

An automatic detecting method for regarding the connector II as the "VTR exclusive connector" by determining an input video signal supplied to the connector II through the connecting cable 7 as reproduced from a VTR on the basis of features thereof according to the third method will be described.

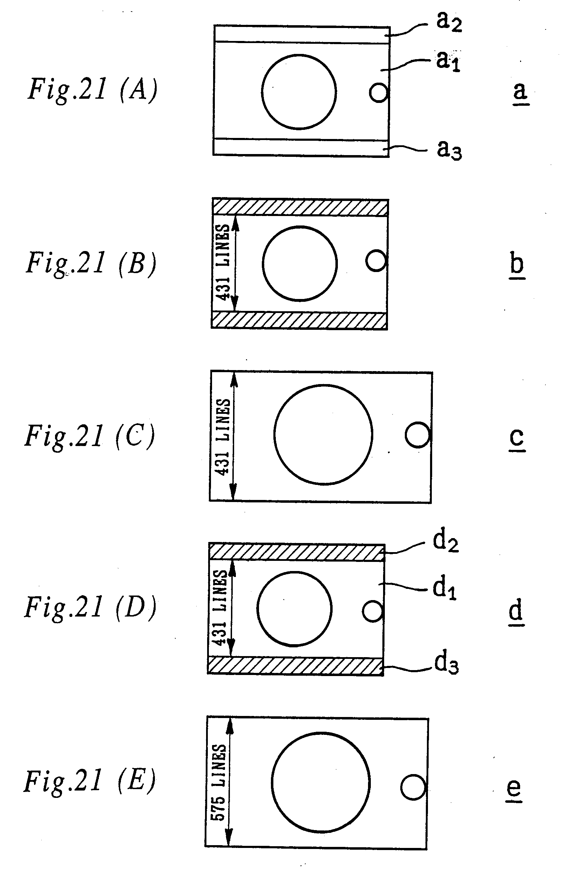

In order to extract the "EDTV identification signal bb" (Fig. 2(A)) or the "EDTV identification signal bb and reference level RL" (Fig. 2(B)) which are digital data signal inserted into a specific line within the vertical retrace period of the video signal, an identification signal detection circuit 20 (for example, teletext decoder, etc.) having construction shown in Fig. 3 is generally used. In Fig. 3, 21 denotes a video signal input terminal, 22 a data extractor circuit, 23 a data content identification circuit, 24 a horizontal synchronizing signal separator circuit, 25 a vertical synchronizing signal separator circuit. 26 a PLL circuit and 27 a timing pulse generator circuit. The PLL circuit 26 is composed of a phase comparator circuit 28, a VC0 (voltage controlled oscillator) 29 and a counter circuit 30.

A video signal supplied from the video signal. input terminal 21 is supplied to the horizontal synchronizing signal separator circuit 24, the vertical synchronizing signal separator circuit 25 and the data extractor circuit 22, respectively. A horizontal synchronizing signal H.sync obtained by separating the video signal supplied from the horizontal synchronizing signal separator circuit 24 through a line 24a is supplied to the PLL circuit 26 and the timing pulse generator circuit 27, respectively.

The PLL circuit 26 outputs a clock which is generated by multiplying the horizontal synchronizing signal H.sync having it frequency relatively locked to the H.sync, thus generated clock is supplied to the timing pulse generator circuit 27 and the data content identification circuit 23 respectively. The vertical synchronizing signal separator circuit 25 outputs a signal corresponding to a vertical retrace period by separating it from the video signal and supplies the signal to the timing pulse generator circuit 27. Since the identification signal bb for identifying an EDTV signal is inserted together with the constant blank period h1 following it, into a specific line (for example, 23rd line of a television broadcasting system of 625 lines/ 50 fields) within a vertical retrace period as shown in Fig. 2(A) or inserted together with the reference level RL inserted into the blank period h1 as shown in Fig. 2(B) as mentioned previously, the timing pulse generator circuit 27 generates a timing pulse correspondingly with a period of the specific line within the vertical retrace period by combining the vertical retrace period and the horizontal synchronizing signal H.sync and supplies it to the data extractor circuit 22. The data extractor circuit 22 extracts a video signal in a period synchronized with the timing pulse supplied from the timing pulse generator circuit 27, and the extracted video signal is supplied to the data content identification circuit 23. The data content identification circuit 23 identifies the "identification signal bb" or "identification signal bb and the reference level RL" on the basis of the video signal supplied from the data extractor circuit 22.

Thus, it becomes possible to detect that the input video signal supplied from the video signal input terminal 21 is a video signal reproduced from a VTR on the basis of the features thereof to be described below and automatically make the connector II as the "VTR exclusive connector".

The PLL circuit 26 shown in Fig. 3 may or may not be locked depending on a state of the input video signal supplied from the video signal input terminal 21 (a state where the input video signal is reproduced from a VTR and a state where it is not from a VTR depending on the stability of signals).

A construction of the PLL circuit 26 for identifying whether the input video signal is reproduced from a VTR or not by utilizing the above mentioned phenomenon is shown in Fig. 4. That is, the PLL circuit 26 comprises a first loop C which includes a voltage controlled oscillator having a crystal as an external constant and whose locking range is narrow, a second loop D which includes a voltage controlled oscillator having an LC circuit as an external constant and whose locking range is wide and a switch SW for switching outputs from these loops.

The first loop C is composed of a phase comparator circuit 28, a counter 31, a VXO (voltage controlled crystal oscillator) 32, a full wave rectifier circuit 33, a low-pass filter 34 and a level detector circuit 35. The second loop D is composed of a phase comparator circuit 36, a counter 37 and a VCO 38 having an LC time constant 38A. A contact L of the switch SW is supplied with a clock from the first loop C and a contact H thereof is supplied with another clock from the second loop D. A movable contact of the switch SW is connected to the timing pulse generator circuit 27. Switching of the movable contact of the switch SW is performed by a level detection signal from the level detector circuit 35 of the first loop C. When the level detection signal is in "H" level, the movable contact of the switch SW is switched to the contact H (in which case, a VTR is judged to be the input signal source). When the level detection signal is in "L" level, the movable contact of the switch SW is switched to the contact L (in which case, a VTR is judged to be not reproducing the signal).

When an output of the phase comparator 28 of the first loop C includes a large amount of AC component (that is, when the loop C is not locked due to the unstable frequency signal), the video signal is regarded-as "VTR reproduced", an output of the oscillator of the second loop D is used. When the output of the phase comparator 28 of the first loop C does not include a large amount of AC component (that is, when the loop is locked), the video signal is regarded as "not VTR reproduced" and an output of the oscillator of the first loop C is used.

For detecting the AC component when the output of the phase comparator 28 of the first loop C includes a large amount of AC component (that is, when the loop is not locked), a DC component of the output of the phase comparator 28 is removed by an unshown coupling capacitor, then full-wave rectified by the full-wave rectifier circuit 33, then unnecessary high frequency components from it are removed by the low-pass filter 34 and compared with the reference level by the level detector circuit 35.

The interface between the EDTV compatible VTR (the reproducing section 2 of the "improved VTR" VI) and the EDTV receiver 3 has been described in the foregoing. It is necessary. on the side of a recording section 1 (a "slave" recorder in a dubbing system) of the "improved VTR" VI, to identify whether or not the auxiliary signal is demodulated (or decoded) during the recording when an output of another VTR is connected to an external input of the VTR (connector I provided on the recording section 1 of the "improved VTR" VI) (that is, when a dubbing is performed, etc.) and, therefore, it is necessary to apply the first to third methods for discriminating the base-band auxiliary signal described previously to the connector I as well.

An embodiment of circuit construction for recording and reproducing operations of a VTR will be described. A construction of an embodiment of the recording section 1 of the "improved VTR" VI is shown in Fig. 5. The recording section 1 of the "improved VTR" VI shown in Fig. 1 is composed of a luminance (Y) signal input terminal 41 to which a luminance signal out of an input signal composed of the luminance signal and a color signal (so-called Y/C separated signals) is supplied, a color signal input terminal 42 to which the separated color signal is supplied, a composite video signal input terminal 43 to which a composite video signal is supplied, a modulated auxiliary signal demodulating circuit 44 for demodulating a modulated auxiliary signal contained in the luminance signal and outputting a base band auxiliary signal, a reference level attaching circuit 45 for adding the reference level RL to the base band auxiliary signal as described previously, a comb type luminance signal filter circuit 46 for extracting the luminance signal from the composite video signal, a color signal separator circuit 47 for extracting the color signal from the composite video signal, a luminance signal recording and processing circuit 48 having an identical construction to that of a known VTR luminance signal recording system, a color signal recording and processing circuit 49 having an identical construction to that of a known VTR color signal recording system, a frequency multiplexing circuit 50 (adder) for frequency multiplexing an FM modulated luminance signal and a low frequency converted color signal, a recording amplifier 51, a set of video heads 52 (for recording only or for recording and reproducing), an output terminal 53 for outputting an input signal of the luminance signal recording and processing circuit 48, an output terminal 54 for outputting an input signal of the color signal recording and processing circuit 49, an input terminal 55 to which the ID signal from the pin of the multi-pin connector for receiving the base band auxiliary signal identification signal is supplied, an input switching signal input terminal 56 to which an input switching signal which determines whether it is an antenna input from the antenna 4 or an external input from the connector I is supplied, an identification signal detection circuit 57 for identifying the ID signal supplied from- the input terminal 55, an EDTV determination circuit 58 for identifying a configuration of the EDTV signal on the basis of output signals from the input switching signal input terminal 56, the identification signal detection circuit 57 and an identification signal detection circuit 59 which will be explained later.

The recording section 1 is further composed of an identification signal detection circuit 59 for detecting an identification signal of an output signal from a switch SW3, a base band auxiliary signal identification signal generator circuit 60 for outputting a base band auxiliary signal identification signal on the basis of an instruction signal from the EDTV determination circuit 58, a base band auxiliary signal identification signal output terminal 61 for outputting a base band auxiliary signal identification signal to a predetermined pin of the multi-pin connector from which the base band auxiliary signal identification signal is transmitted, a switching pulse generator circuit 62 for generating a switching pulse on the basis of an instruction signal from the EDTV determination circuit 58, a servo control pulse generator circuit 63 for generating a known servo control pulse on the basis of an instruction signal from the EDTV determination circuit 58, a servo control pulse recording amplifier 64, a control head 65 for recording and reproducing a control pulse, a switch SW1 having three contacts A, B and C and switches SW2, SW3. SW4 and SW5 each having 2 contacts A and B.

The switches SW3, SW4 and SW5 are switched according to whether the input video signal is Y/C separated input from the input terminals 41 and 42 or it is a composite video signal from the input terminal 43. The duty cycle of the servo control pulse from the servo control pulse generator circuit 63 when respective signals from the switches SW1 and SW2 are switched or recorded, is switched as shown in Fig. 9 by identifying, by any of the first to third methods, whether or not an external apparatus (not shown) connected to the input terminals 41 to 43 is another VTR and identifying the configuration of the video signal by the EDTV determination circuit 58 according to the identification signal bb of the video signal (luminance signal) and the ID signal from the multi-pin connector I.

In Fig. 9, "not EDTV" denotes a usual TV signal which is not the EDTV signal and "not LLLS" denotes a control signal which has no identification signal "LLLS".

The switching pulse generator circuit 62 in Fig. 5 generates timing pulses indicative of an auxiliary signal period and a picture signal period shown in Fig. 11, respectively, by using the vertical synchronizing signal V.sync and the horizontal synchronizing signal H.sync, and switches the switches SW1 and SW2 with the timing and positions as shown in Fig. 9. An output of the switch SW1 is processed in the luminance signal recording and processing circuit 48 and an output of the switch SW2 is processed in the color signal recording and processing circuit 49. The FM modulated luminance signal and the low frequency converted color signal are multiplexed in the frequency multiplexing circuit 50 and recorded in a slant track on the magnetic tape 5 by the video head 52 through the recording amplifier 51. Further, the servo control pulse from the servo control pulse generator circuit 63 is recorded on the magnetic tape 5 forming a control track through a servo control pulse recording amplifier 64 and a control head 65, with various duty cycles depending on the respective situations as shown in Fig. 9.

An embodiment of the reproducing section 2 of the "improved VTR" VI will be described with reference to Fig. 6. The reproducing section 2 is comprised of a set of video heads 52 (for reproduction only or for recording and reproducing), a control head 65, a reproducing preamplifier 66. a high-pass filter 67. a luminance signal reproducing and processing circuit 68 having a complementary construction to that of the luminance signal recording and processing circuit 48 and an identical construction to that of a known VTR luminance signal reproducing system, a luminance signal output terminal 69 for outputting an output signal of a switch SW6, a low-pass filter 70, a color signal reproducing and processing circuit 71 having a complementary construction to that of the color signal recording and processing circuit 49 and an identical construction to that of a known VTR color signal reproducing system, a color signal output terminal 72 for outputting an output signal of a switch SW7, a video output control circuit 73 for controlling movable contacts of the switches SW6 and SW7, a servo control pulse reproducing amplifier 74, an "LLLS" sequence detection circuit 75 for detecting a duty cycle of a reproduced servo control pulse, a multiplexing signal generating circuit 76 for producing a multiplexing signal (for example, alternating signal) on the basis of an "LLLS" sequence detection signal and an externally supplied special reproducing mode pulse and for supplying it to a predetermined pin of a multi-pin connector from which a base band auxiliary signal identification signal is fed. The reproducing section 2 is further comprised of switches SW6 and SW7, an adding circuit 77 for superimposing the DC level (logic signal) according to the possible industry standard mentioned previously, to the output of the multiplexing signal generating circuit 76, so that the output signal superimposed with the logic DC level is supplied to the predetermined pin (8th pin of the multi-pin connector according to CENELEC standard) through an output terminal 78.

This embodiment utilizes the second method of identifying the base band auxiliary signal, in which a change of duty cycle of the reproduced control pulse obtained through the control head 65 and the servo control pulse reproducing amplifier 74 is detected, an AC component (for example, a square-wave having a horizontal scanning period (H period)) to be multiplexed (superimposed) at a predetermined pin (for example, 8th pin) of a multi-pin connector II is produced when the detected change coincides with the "LLLS" and the AC component is added to the logic DC level at the 8th pin and outputted to the predetermined pin of the connector II during a normal reproduction.

During a special reproduction, an AC component (for example, a square wave having a period twice the H period) indicative of a special reproduction is added to the DC level and a sum is supplied to the predetermined pin of the connector II.

A video signal processing to be performed through the high-pass filter 67, the low-pass filter 70, the luminance signal reproducing and processing circuit 68 and the color signal reproducing and processing circuit 71 is similar to that to be performed in a luminance signal reproducing system and a color signal reproducing system of a known VTR. When a conventional TV receiver having aspect ratio of 4 : 3 is to be connected, a base band auxiliary signal causes an interference on a screen. In order to prevent such an interference from occurring, the switches SW6 and SW7 provided in the preceding stages of the luminance signal output terminal 69 and the color signal output terminal 72 function to replace the auxiliary signal with a constant level DC signal during the auxiliary signal period. Instead of supplying such a constant level DC signal, it may be arranged to change the color of the displayed image, or to replace with a graphic image or to display an information such as date, etc. Such switching by means of the switches SW6 and SW7 may be performed by a manual switch which is not shown or by an automatic detection of an apparatus to be connected.

The above described TV signal processing system according to the present invention, in which the type of a video signal containing an EDTV signal which is composed of a picture signal indicative of an image information and an auxiliary signal related to the picture signal and time-division multiplexed with the picture signal, is determined, and a video signal processing proprietary to the determined video signal is performed, the system comprises detection means for detecting a video signal supplied from a video signal recording and/or reproducing system and video signal processing means for processing only an EDTV signal whose auxiliary signal is transformed in the base-band frequency as the EDTV signal when the detection means detects the video signal and processing an EDTV signal whose auxiliary signal is modulated or encoded as the EDTV signal when the detection means detects a video signal supplied by other systems than the video signal recording and/or reproducing system. Therefore, in case where, for example, an EDTV signal is recorded by an EDTV compatible VTR which transforms the modulated auxiliary signal into base-band for recording, the degradation of image quality due to a wrong signal processing for the EDTV signal recording by a conventional VTR, can be prevented and thus video signals having various signal formats including EDTV signal can be recorded and reproduced with high image quality.

There is another problem associated in a video tape recorder of helical scan type, of which a video signal of 1 field is recorded on one track by a plurality of heads sequentially and alternatively and, during a reproduction thereof, the respective tracks are reproduced sequentially and alternatively by a plurality of heads. Further, in each of the recording and reproducing, head switching point due to switching the heads every field resides in a period of an auxiliary signal dd2 (head switching point period) within a video signal period immediately before a vertical retrace period and the head switching point is set at a point, for example, 5H to 8H before a vertical synchronizing signal V.sync which starts from the 3rd H in the vertical retrace period, where H is a horizontal scanning line period, as shown in Fig. 11. As a result, noise due to the switching point is mixed in an auxiliary signal dd2 located after a picture signal cc.

When a video signal magnetic recording apparatus for recording an EDTV signal is a VTR of helical scan system which includes the switching point in a video signal period, the following problems occur. That is, in the previously mentioned EDTV receiver, since the auxiliary signals dd1 and dd2 of 1 field corresponds respectively to the upper and lower portions of the screen shown in Fig. 10 and enhance the picture signals cc, noise mixed in the rear auxiliary signal dd2 due to the included switching point is mixed in the picture signals cc, as a result, the switching point is shifted from a normally invisible position to a higher level to become visible on the screen compared with the conventional case. For example, if a switching point is set at a point 8H before the vertical synchronizing signal V.sync, its vertical position on a screen having an aspect ratio of 16 : 9 is moved to about 8 % level in height from the screen bottom and thus spot noise due to the switching point becomes conspicuous on the screen.

Further, since continuity of the rear auxiliary signal dd2 is broken by the presence of the switching point, a timing of the auxiliary signal dd2 after the switching point for writing it in an enhancement circuit (memory) is deviated from a write timing of a picture signal. Since. therefore, an enhancement is performed with the picture signal and the auxiliary signal which is deviated in time from the picture signal, causing an image quality being degraded.

### [Second Embodiment]

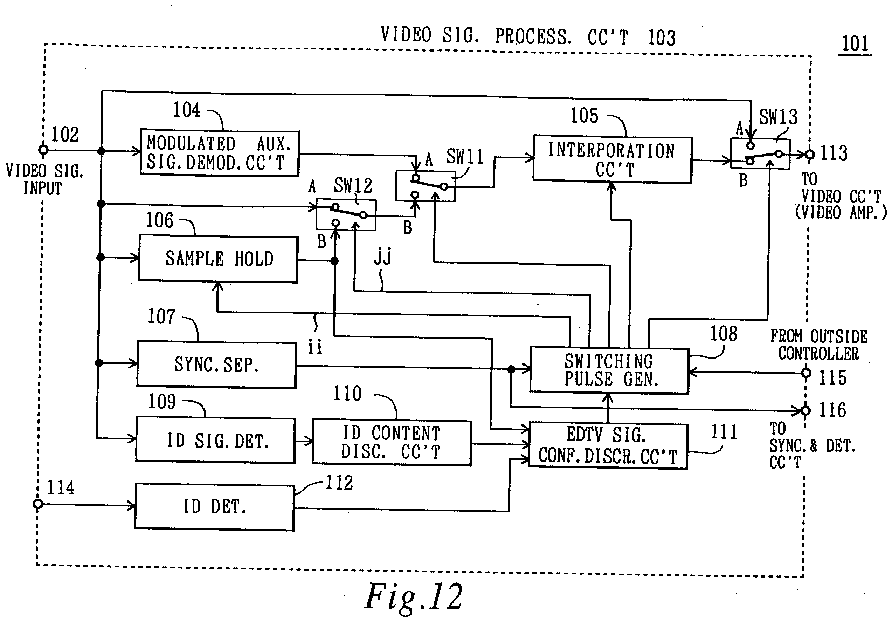

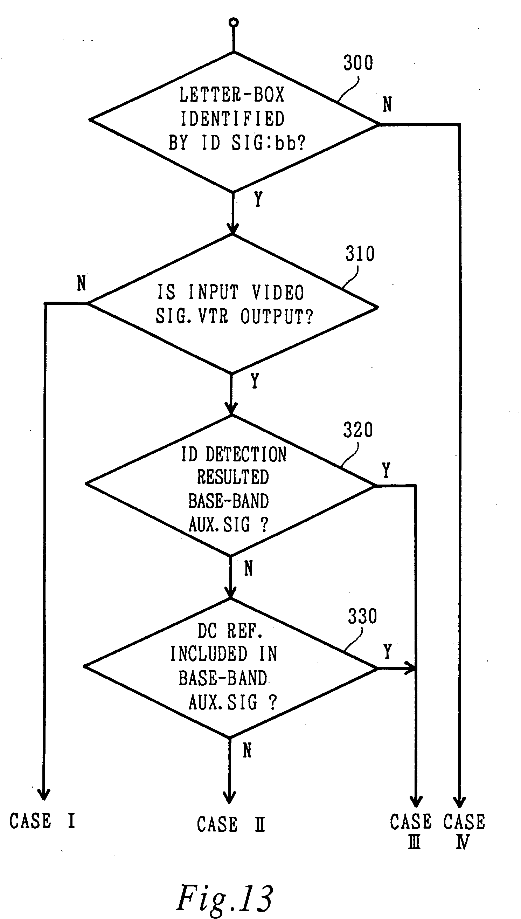

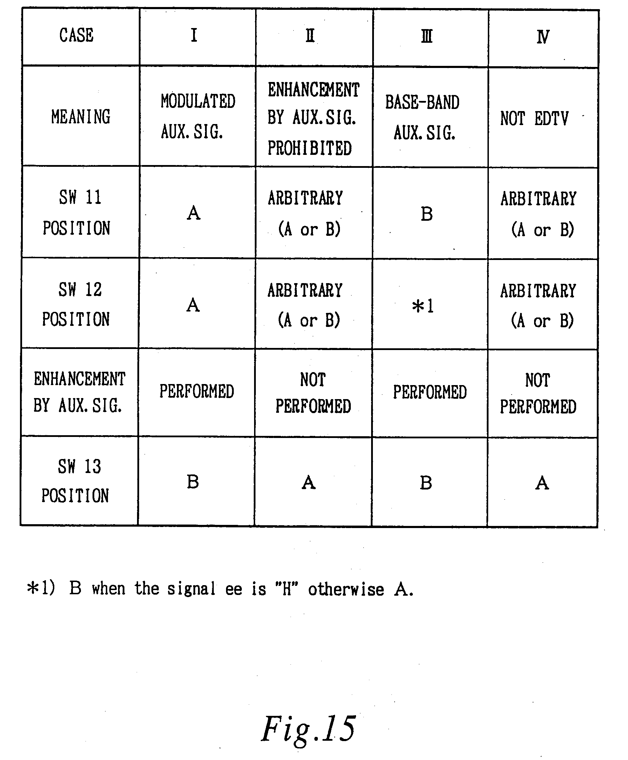

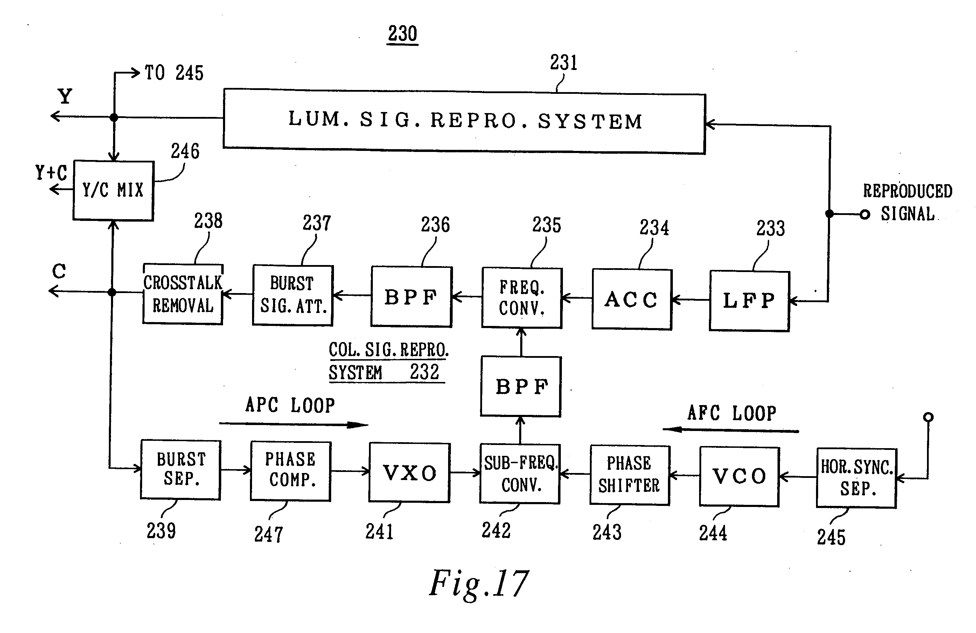

A second embodiment of a television signal processing system according to the present invention will be described with reference to Figs. 10 to 15. Fig. 12 is a block diagram of a video signal processing circuit which is a main portion of a television receiver to which the television signal processing system according to the present invention is applied, Fig. 13 is a flow chart showing an operation of identifying an EDTV signal configuration which is performed by an EDTV signal configuration discrimination circuit 111, Fig. 14 shows timing relations, in a form of waveform, between the EDTV signal, a switching control signal and a sample-hold signal ii, and Fig. 15 is a table showing a relation between a supply of switching control signal to switches SW11 to SW13 and supply of an operation control signal to an interpolating circuit 105 which are performed by a switching pulse generating circuit 108.

As shown in Fig. 12, the television receiver 101 to which the second embodiment of the present invention is applied is constructed such that various EDTV signals can be received and displayed with high image quality. The receiver 101 comprises a video signal processing circuit 103 which receives selectively, at a video signal input terminal 102. by an unshown input selection switch, thereof, an EDTV signal outputted from a conventional video detector within the receiver 101 or an EDTV signal supplied from other apparatus than the receiver 101, and responsive to a configuration of the selectively received EDTV signal, the video signal processing circuit 103 produces an enhanced video signal by processing (interpolation) the received EDTV signal as described later. so that various EDTV signals in configuration are always displayed in good picture quality.

An output of the video signal processing circuit 103 is connected to a known thus not shown video signal amplifier circuit, which functions to amplify a supplied video signal to a predetermined level and supplies the amplified video signal to a color demodulation circuit and a synchronizing deflection circuit, and supplies a luminance signal related to the video signal to a band-limited amplifier circuit.

The video signal processing circuit 103 includes a modulated auxiliary signal demodulating circuit 104, an interpolation circuit 105, a sample hold circuit 106, a sync signal separator circuit 107, a switching pulse generator circuit 108, an identification signal detection circuit 109, an identification signal content discrimination circuit 110, an EDTV signal configuration discrimination circuit 111, an ID detection circuit 112 and switches SW11 to SW13 as shown in Fig. 12.

In Fig. 12, 113 denotes a video signal output terminal, 114 an ID signal input terminal, 115 an external control signal input terminal and 116 a synchronizing signal output terminal.

One of contacts of the input selection switch (not shown) provided in a preceding stage of the video signal input terminal 102 is connected to a video signal connecting pin of a multi-pin connector, for example, a 21-pin connector, connected to a video signal output terminal of a VTR (a video signal magnetic reproducing apparatus having a video signal reproducing system complementary to a video signal recording system of the previously mentioned video signal magnetic recording apparatus) provided externally of the television receiver 101 and an EDTV signal is supplied through the video signal connecting pin in response to are production operation of the VTR.

In this case, when at least one pin of the multi-pin connector provided in the television receiver 101 is used for connecting a VTR and a video signal supplied through the connector is regarded as a VTR output, it is possible to identify VTR output or not by the input switching as described later. In this case, the ID signal indicative of the auxiliary signal of the EDTV signal being a base band auxiliary signal, is also outputted responsive to a configuration of the EDTV signal and supplied to the television receiver 101 by an arrangement that an ID signal connecting pin of the multi-pin connector which is connected to the ID signal output terminal of the VTR, is connected to the ID signal input terminal 114.

The EDTV signal configuration discrimination circuit 111 identifies a signal configuration of the EDTV signal supplied to the video signal input terminal 102 by identifying signal configurations of; the output of the synchronizing signal separator circuit 107 for separating a horizontal and vertical synchronizing signals; the output of the identification signal content discrimination circuit 110 for identifying a modulation information content of the identification signal bb of the EDTV signal; and the output of the ID detection circuit 112 for detecting the ID signal.

The identification signal bb of the EDTV signal includes a coded information whether it is letter box or not, a coded information where the picture signal period is inserted and coded modulation information corresponding to the letter box system modulation method of the auxiliary signals dd1 and dd2 such as VSB modulation, digital modulation (encode), etc. Responsive to the identification result made by the EDTV signal configuration discrimination circuit 111, the switching pulse generator circuit 108 supplies, as required, switching control signals to the switches SW11 to SW13, an operation control signal to the interpolation circuit 105 and the sample-hold signal ii to the sample-hold circuit 106 respectively. In this manner, the video signal processing circuit 103 can perform a video signal processing proprietary to the configuration of the EDTV signal.

The configuration of the EDTV signal is classified to 1) to 4) which are determined by the EDTV signal configuration discrimination circuit 111 according to the flow chart shown in Fig. 13. Result of the determination is outputted as switching pulse generation control signals corresponding to respective 4 cases "case I" to "case-IV".
1) Whether the identification signal bb of the EDTV signal, is letter box system or not. (step 300)
2) Whether the EDTV signal of the letter box system, is a VTR output or not. (step 310)
3) Whether the auxiliary signal of the EDTV signal which is the VTR output in the letter box system, is a base band auxiliary signal or not. (step 320)
4) Whether the EDTV signal which is of letter box system, is the VTR output and includes a base band auxiliary signal includes a DC reference signal or not. (step 330)

The above mentioned 4 cases, "case-I" to "case-IV", have meanings shown in Fig. 15.
"Case-I" means the configuration 1) above and not the configuration 2). That is, the EDTV signal output from the video detection circuit in the television receiver 101 is supplied to.
"Case-II" means the configurations 1) and 2) and not the configurations 3) and 4). That is, the EDTV signal reproduced from a VTR provided externally of the television receiver 101, is supplied to.
"Case-III" means a combination of the configurations 1) to 3) or a combination of the configurations 1) to 4). That is, the EDTV signal which is reproduced from a VTR provided externally of the television receiver 101 and includes the base band auxiliary signal and the DC reference signal shown in Fig. 14(A), is supplied to.
"Case-IV" means no configuration 1). That is, a video signal which is not an EDTV signal supplied internally or externally of the television receiver 101 and has an aspect ratio of 4 : 3, is supplied to.

As shown in Fig. 15, the switching pulse generator circuit 108 supplies, the switching control signals to the switches SW11 to SW13, the operation control signal to the interpolation circuit 105 and the sample-hold signal ii to the sample-hold circuit 106 respectively according to the "case-I" to "case-IV" based on the the flow chart (Fig. 13) showing the identifying operation of the EDTV signal configuration.

### "Case-I"

Since the EDTV signal is the one outputted from the video detection circuit within the television receiver 101, the picture signal cc must be enhanced with the auxiliary signals dd1 and dd2. In this case, it is possible to obtain a video signal of the picture signal cc enhanced with a base band auxiliary signal by obtaining thereof by demodulating the modulated auxiliary signal and enhancing the picture signal cc with the base band auxiliary signal at a matched timing. Therefore, an image having aspect ratio of 16 : 9 and having an improved image quality can be displayed on the screen in full size.

The EDTV signal configuration discrimination circuit 111 determines the configuration of the EDTV signal as "case-I" on the basis of outputs from the sample-hold circuit 106, the identification signal content discrimination circuit 110 and from the ID detection circuit 112. And correspondingly to the "case-I", the EDTV signal configuration discrimination circuit 111 outputs the switching pulse generation control signal to the switching pulse generator circuit 108. In response to this, the switching pulse generator circuit 108 continuously supplies a switching control signal jj ("L" level) to the switch SW12. Therefore, the movable contact of the switch SW12 is continuously connected to the contact A to which the EDTV signal is supplied through the video signal input terminal 102.

The switching pulse generator circuit 108 supplies the switching control signal ("L" level) to the switch SW11 for auxiliary signal periods (Fig. 14(A)) in which the reproduced auxiliary signals dd1 and dd2 of the EDTV signal are present respectively. Therefore, the movable contact of the switch SW11 is connected to the contact A connected to the output of the modulated auxiliary signal demodulating circuit 104 for the two auxiliary signal periods.

Thus, during this connection period, the base band auxiliary signal which is obtained by demodulating the modulated auxiliary signal of the EDTV signal by means of the modulated auxiliary signal demodulation circuit 104 can be supplied to the interpolation circuit 105 through the contact A and the movable contact of the switch SW11. The modulated auxiliary signal demodulating circuit 104 can demodulate any of the VSB modulated, digitally modulated (encoded) auxiliary signals dd1 and dd2 which are modulated according to the letter box system modulation system.

The switching pulse generator circuit 108 supplies the switching control signal ("H" level) to the switch SW11 for a picture signal period (Fig. 14(A)) in which the picture signal cc of the EDTV signal is present. Thus, the movable contact of the switch SW11 is connected to a contact B connected to a movable contact of the switch SW12 for this picture signal period. Thus, during this connection period, the switch SW11 can supply the picture signal cc of the EDTV signal from the switch SW12 through the contact B and the movable contact of the switch SW11 to the interpolation circuit 105.

The interpolation circuit 105 responds to the operation control signal ("H" level) supplied from the switching pulse generator circuit 108 matching the timing of the base band auxiliary signal and the picture signal cc supplied sequentially and alternately through the switch SW11 and enhance them and supplies a resultant video signal to a contact B of the switch SW13.

The switching pulse generator circuit 108 continuously supplies the switching control signal ("H" level) to the switch SW13. Thus, a movable contact of the switch SW13 is continuously connected to a contact B thereof to which the video signal is supplied from the interpolation circuit 105. In this manner, during this connection period, the video signal of the picture signal enhanced by the base band auxiliary signal is supplied to the video signal output terminal 113 and, after suitably processed by the known video amplifier circuit, the color demodulation circuit, the synchronizing/deflecting circuit and the band pass amplifier circuit of the television receiver 101. the video signal is displayed on the screen of a cathode ray tube thereof an image which is improved in picture quality and has an aspect ratio of 16 : 9 in full size.

### "Case-II"

This is the case where an EDTV signal reproduced by a VTR provided externally of the television receiver 101, is supplied. In this case, the auxiliary signal is not a base band auxiliary signal. However, since it is degraded by jitter or a Y/C separating circuit during recording and reproduction by the VTR. it can not be demodulated satisfactorily by the modulated auxiliary signal demodulating circuit 104.

When the picture signal cc thereof is enhanced by the reproduced auxiliary signals dd1 and dd2, quality of a resultant image is degraded and the video signal processing circuit 103 outputs the EDTV signal without any signal processing. Since the video signal having a picture signal enhanced by the auxiliary signal is not used, it is possible to display an image of improved quality having an aspect ratio of 16 : 9 in full size where it does not contain noise which would otherwise be caused by an enhancement using the degraded auxiliary signal.

In this operation, the EDTV signal configuration discrimination circuit 111 determines the configuration of the input EDTV signal as "case-II" on the basis of outputs of the sample-hold circuit 106. the identification signal content discrimination circuit 110 and the ID detection circuit 112, and supplies a switching pulse generation control signal corresponding to "case-II" to the switching pulse generator circuit 108.

In response to the control signal, the switching pulse generator circuit 108 continuously supplies the switching control signal ("L" level) to only the switch SW13, so that the movable contact of the switch SW13 is continuously connected to the contact A to which the EDTV signal supplied to the video signal input terminal 102 is fed directly.

In this manner, the modulated auxiliary signal demodulation circuit 104. the switch SW11 and the interpolation circuit 105 are bypassed and the EDTV signal is not interpolated but passed to the video signal output terminal 113 and, after suitably processed by the known video amplifier circuit, the color demodulation circuit, the synchronizing/deflecting circuit and the band pass amplifier circuit of the television receiver 101, the input EDTV signal is displayed on the screen of a cathode ray tube thereof an image of improved quality having an aspect ratio of 16 : 9 in full size where it does not contain noise which would otherwise be caused by an enhancement using the degraded auxiliary signal.

### "Case-III"

This is the case where an EDTV signal having a base band auxiliary signal and a DC reference level and reproduced by a VTR provided externally of the television receiver 101, is supplied. In this case, level of the DC reference signal inserted into a head portion of each field, is held. And the held DC reference level replaces a portion of the auxiliary signal in the field only for the time period corresponding to the switching point period existing at the rear portion of the auxiliary signal. With this scheme, it is possible to avoid the problem in the case where the enhancement is performed by using the auxiliary signal including the switching point and possible to display an image whose continuity between fields is satisfactory and whose image quality is stably improved having an aspect ratio of 16 : 9 on the screen in full size.

In order to realize this, the EDTV signal configuration discrimination circuit 111 determines the configuration of the EDTV signal as "case-III" on the basis of outputs of the sample-hold circuit 106, the identification signal content discrimination circuit 110 and the ID detection circuit 112 and supplies a switching pulse generation control signal corresponding to "case-III", to the switching pulse generator circuit 108.

In response to the control signal, the switching pulse generator circuit 108 continuously supplies the switching control signal ("H" level) to both the switches SW11 and the switch SW13, so that each of the movable contacts of the switches SW11 and SW13 is continuously connected to the contact B of the switches SW11 and SW13. The switching pulse generator circuit 108 also supplies the operation control signal ("H" level) to the interpolation circuit 105. Thus, the movable contact of the switch SW13 is continuously connected to the contact B to which the video signal is supplied from the interpolation circuit 105.

The switching pulse generator circuit 108 supplies the switching control signal jj ("H" level, shown in Fig. 14(B)) to the switch SW12 to switch the movable contact of the switch SW12 from the contact A to the contact B for only a period corresponding to a switching point of an end portion of respective fields as shown in Fig. 14(A) (a predetermined period immediately ahead of the succeeding vertical retrace period), otherwise the signal jj keeps the movable contact of the switch SW12 at the contact A.

Further, the switching pulse generator circuit 108 supplies the sample-hold signal ii (Fig. 14(C)) to the sample-hold circuit 106 to hold the level of the DC reference signal inserted into a head portion of each field until the sample-hold signal ii is renewed in the subsequent field, as shown in Fig. 14(A).

A rise edge of the switching control signal jj is set slightly ahead of the switching point. For example, when the position of the switching pulse is before the vertical synchronizing signal V.sync by 5H to 8H, the rise edge is set on the line 8H before the vertical synchronizing signal V.sync. This timing can be regulated arbitrarily by a regulation signal which is supplied to the switching pulse generator circuit 108 through an external control signal input terminal 115 and is changeable by manually regulating a controller which is not shown. For example, the switching point can be changed by changing a resistance value or a capacitance value of a time constant of a mono-stable multivibrator by means of a manual control or changing a count value of a counter.

In this manner, during a terminal period of a field, the level of the DC reference signal in the field is supplied to the interpolation circuit 105 through the switches SW12 and SW11 and, during other period, the EDTV signal supplied through the video signal input terminal 102 is supplied to the interpolation circuit 105 through the switch SW11.

By performing the switching in this manner, the auxiliary signal dd2 is momentarily kept at the DC reference level while the switch SW12 is connected to its contact B. Therefore, even if the picture signal cc is enhanced with this DC reference level by the interpolation circuit 105, it is substantially the same as the picture signal cc, which simulates to a case where no interpolation is performed Therefore, degradation of image quality in this period can be avoided.

Alternatively, the interpolation circuit 105 may be defeated during the "H" period of switching control signal jj by supplying an operation control signal ("L" level) to the interpolation circuit 105.

### "Case-IV"

This is a case where the television receiver 101 is supplied internally or externally with a video signal having an aspect ratio of 4 : 3 and being not an EDTV signal. In this case, since any signal processing in the video signal processing circuit 103 is unnecessary, this video signal is not processed but is outputted as it is. Therefore, it is possible to display an image whose aspect ratio is simply converted from 4 : 3 to 16 : 9 in the other part of the receiver than the processing circuit 103.

Since a switching operation therefor is similar to that in the "case-II", details thereof are omitted.

In the foregoing, the present invention has been described with reference to a television receiver, however, it is possible to record a video signal having various signal configurations including EDTV signal configuration with high image quality by providing a video signal recording apparatus such as a video tape recorder with a video signal processing circuit denoted by 103 in Fig. 12 which includes a signal configuration discrimination circuit for identifying the signal configuration of various video signals including the EDTV signal, supplying an input video signal to be recorded to the terminal 102 and connecting an output of the terminal 113 to the video signal recording and processing circuit.

As described, the television receiver to which the present invention is applied can display an EDTV signal composed of a picture signal indicative of image information and an auxiliary signal related to the picture signal and time-division multiplexed with the latter signal and comprises a video signal processing circuit including a signal configuration discrimination circuit for outputting an identification signal obtained by identifying a signal configuration of various video signals to be displayed on the screen including the EDTV signal, and an enhancement circuit for outputting an enhanced video signal obtained by enhancing the picture signal with the auxiliary signal when the identification signal indicates the EDTV signal.

Accordingly, a television receiver capable of displaying, always with high image quality, video signals having various signal configurations including the EDTV signal, is achieved.

Further, since the video signal processing circuit does not perform the enhancement using the auxiliary signal inserted into a predetermined period of a rear portion of a field when the EDTV signal is supplied from a video signal recording and/or reproducing apparatus, it is possible to prevent degradation of image quality in such case.

One of the previously mentioned EDTV signal is the PAL broadcast system and is so-called the "PAL plus system", which is a wide screen (image aspect ratio of 16 : 9) version with an improved image quality of the PAL system. Now, problems of the "PAL plus system" system will be described.

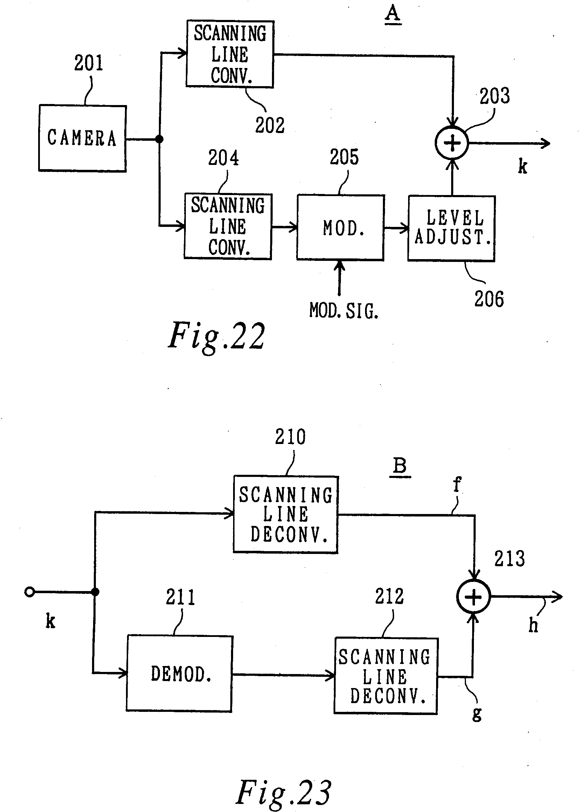

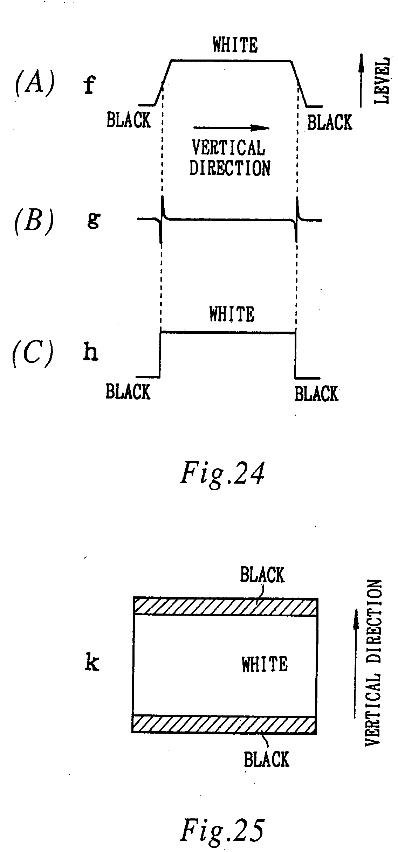

Figs. 21(A) to 21(E) illustrate an image reproduced by PAL plus system, Fig. 22 is a basic encoding algorithm for PAL plus system, Fig. 23 is a basic decoding algorithm for PAL plus system, Fig. 24 shows waveforms of displayed pictures, and Fig. 25 shows a displayed picture pattern.

PAL plus system makes a wide-screen image possible to display on a current TV receiver. In order to realize this, the letter box system is employed in which an original image a is generated by providing a wide screen image a1 obtained by reducing a wide screen original image and upper and lower portions a2 and a3 both having no visible image information are added (Fig. 21 (A)). When such image a of the letter box system is displayed on a current TV receiver having an aspect ratio of 4 : 3 screen, an image b (Fig. 21(B)) which is same as the image a is obtained. However, when it is displayed on a current TV receiver having an aspect ratio of 16 : 9 screen, an image c (Fig. 21(C)) having degraded vertical resolution is displayed if its helper signal described in the following is not utilized.

PAL plus system improves this degradation of vertical resolution when its signal is received by a PAL plus system compatible TV receiver having an aspect ratio of 16 : 9) screen, by transmitting an encoded video signal of which so called a "helper signal" is multiplexed into the upper and lower portions a2 and a3 of the image a so as to improve the resolution of the wide screen image a1.

A basic encoding algorithm A of the PAL plus system is shown in Fig. 22. That is, a TV camera 201 which is capable of shooting a wide screen image having an aspect ratio of 16 : 9, outputs a wide screen video signal (625 lines, 50 fields 2 : 1 interlace system). The wide screen video signal having 572 effective scanning lines/frame which is outputted from the TV camera 201 is subjected to a scanning line conversion 202 in which the scanning line is converted (4-3 conversion) to obtain a main signal which is a wide screen video signal having 431 effective scanning lines/frame and then supplied to one input of a video multiplexing circuit (adder) 203. The wide screen video signal from the TV camera 201 is further subjected to another scanning line conversion 204 in which the scanning line is converted (4-1 converted) to obtain a wide screen video signal having 144 effective scanning lines/frame. Then, it is AM modulated at a frequency of 4.43 MHz which is identical to that of a color burst signal by an AM modulation circuit 205 and, after it is transformed into a low level helper signal by regulating its level to 40 IREp-p by a level adjusting circuit 206, it is supplied to the other input of the video multiplexer circuit 203. The video multiplexer circuit 203 outputs an encoded video signal obtained by multiplexing the main signal with the helper signal.

When the thus encoded video signal is supplied to a current TV receiver having an aspect ratio of 4 : 3, a full image d of the main signal its number of effective scanning lines is converted from 575 to 431 and its vertical resolution is degraded is obtained on the screen (Fig. 21(D)). In Fig. 21(D), d2 and d3 are portions into which the helper signal is inserted but is not visible.

When received by a PAL plus system compatible TV receiver, the encoded video signal is decoded by a decoding algorithm B shown in Fig. 23 which will be described later, then processed by a known video signal processing circuit to display an image e (Fig. 21(E)) having an aspect ratio of 16 : 9. The algorithm B is complementary to the basic encoding algorithm A shown in Fig. 22.

Fig. 23 shows the basic decoding algorithm B for the PAL plus system. That is, when the encoded video signal is supplied (for example, when the PAL plus system broadcasting signal is received), the signal is supplied to a main signal path and a helper signal path. The encoded video signal supplied to the main signal path is subjected to a scanning line deconversion 210 in which the scanning line is converted (3-4 conversion) from 431 effective scanning lines to 575 effective scanning lines to obtain a wide screen video signal "f" having 575 effective scanning lines/frame (Fig. 24(A)) and then supplied to one input of a video multiplexing circuit (adder) 213. Waveforms "f" to "h" shown in Figs. 24 (A) to 24(C) show variations of signal levels in vertical direction of the screen when it is assumed that the encoded video signal corresponds to an image k (Fig. 25) and a center portion thereof is in "white" level and both the upper and lower portions thereof are in "black level".

The encoded video signal supplied to the helper signal path is AM-demodulated by an AM demodulation circuit 211 and is subjected to another scanning line deconversion 212 in which the scanning line is converted (1-4 conversion) from 144 effective scanning lines to 575 effective scanning lines to obtain a wide screen video signal g (Fig. 24(B)) and then supplied to the other input of the video multiplexing circuit 213. The video multiplexer circuit 213 outputs a decoded video signal h (Fig. 24(C)) obtained by multiplexing the wide screen video signal f having 575 effective scanning lines in the main signal path and the wide screen video signal g having 575 effective scanning lines in the helper signal path.

In a case where the video signal which is encoded according to the basic encoding algorithm A is supplied to a VTR of the current broadcasting system (this will be referred to as "current VTR" hereinafter), the helper signal which is AM modulated at a frequency of 4.43 MHz which is identical to the color burst frequency is essentially a luminance signal in nature . However, due to its modulation scheme, upon the Y/C separation performed in a recording system of the current VTR, a majority of energy of the helper signal is processed as if it is a color signal, and its luminance signal component is also subjected to gain/phase distortion. Therefore, the luminance and color signals related to the Y/C separated main and helper signals, are transformed conventionally to an FM modulated luminance signal and a low frequency converted color signal (the frequency lower than that of the luminance signal) in the VTR's known luminance/color signal processing system for recording, and these signals are frequency-multiplexed to be a recording video signal which is sequentially recorded on a recording medium by recording heads.

Whereas a reproducing system of the current VTR reproduces, from the recorded video signal, the luminance and the color signals related to the main and helper signals by a known luminance/color signal reproducing system of the current VTR to obtain a reproduced video signal. This reproduced video signal is subjected to frequency distortion and phase distortion during the recording and reproduction and further a jitter component is included as time axis distortion.

When the reproduced video signal containing the jitter component, is supplied from the current VTR to the PAL plus system compatible TV receiver, and the respective distortions are small, it is possible to obtain a vertical resolution (having the same number of effective scanning lines as 575 of the wide screen video signal from the TV camera 201) enhanced with the helper signal and thus a well defined full image e (Fig. 21(E)) of the main signal is displayed. However, when these distortions are relatively large, the resolution is not correctly enhanced by the helper signal and there will be an interference appeared on the screen due to the respective distortions included in the helper signal.

When a video signal which is obtained by reproducing a high definition video signal such a PAL plus signal which is undesirable to be recorded and reproduced by a current VTR, is supplied to a high definition compatible TV receiver such as PAL plus system compatible TV receiver, it is desirable to interrupt the decoding operation thereof, that is, use of the helper signal is automatically suspended, so that degradation of displayed image quality is prevented. A conceivable method to stop the decoding operation automatically is to insert an identification signal for identifying that a high definition video signal is recorded/reproduced in a current VTR, preliminary into the reproduced video signal supplied from the VTR on the transmission side, and the identification signal is detected in the receiving side TV receiver to stop automatically the decoding operation thereof in response thereto.

However, even if it is possible to record and reproduce such identification signal in a transmitting side VTR (it is possible to record and reproduce such identification signal having frequency of about 2.5 MHz at most), there is no such TV receivers on the receiving side which has a function responsive to such identification signal and automatically stopping the decoding operation. Therefore, when such a high definition video signal is reproduced from a current VTR and supplied to the receiving side TV receiver, it has been not possible to avoid degradation of displayed image quality due to the respective distortions inherently included in the reproduced video signal.

### [Third Embodiment]

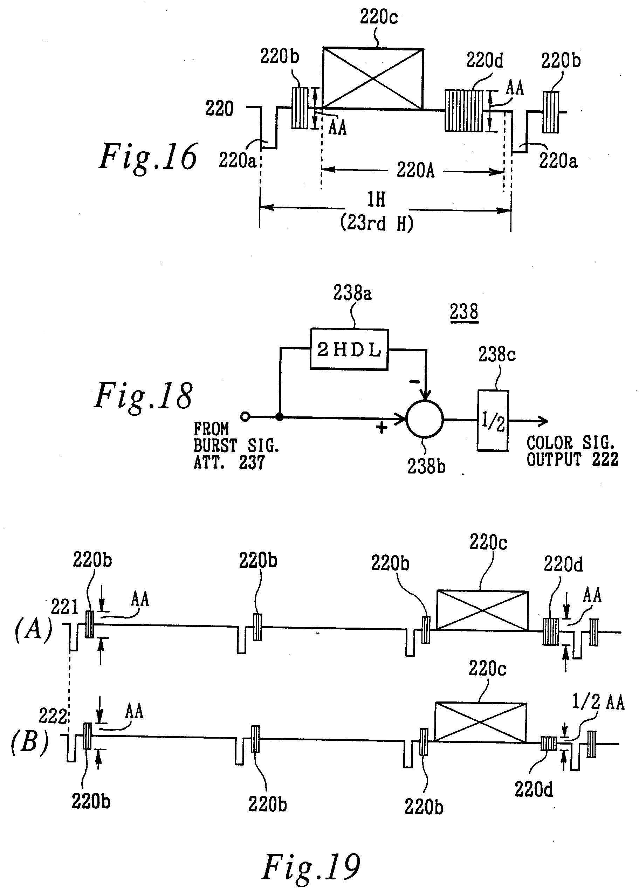

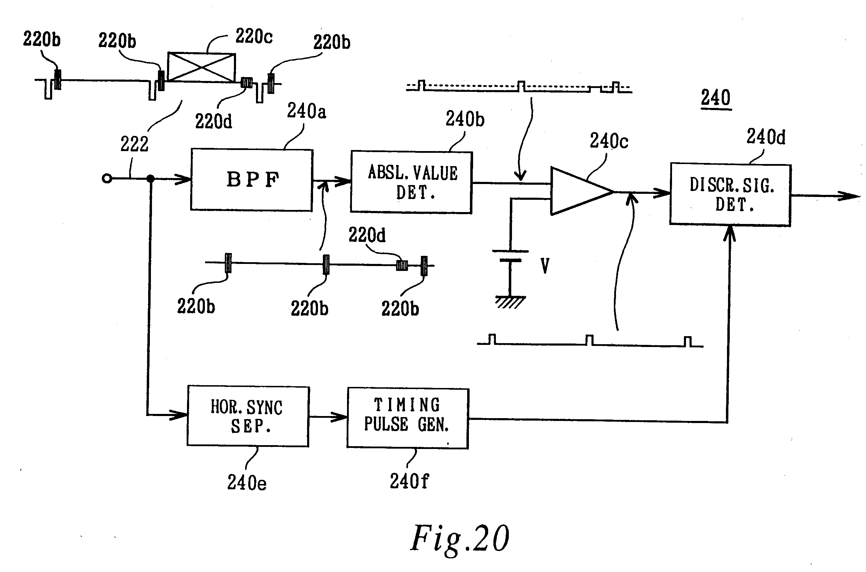

A television signal processing system according to a third embodiment of the present invention will be described with reference to Figs. 16 to 20. Fig. 16 is a signal format of an encoded video signal transmitted in the television signal processing system according to the present invention, Fig. 17 is a block diagram of a color signal reproducing system of a conventional VTR, Fig. 18 is a block diagram of a cross talk removing circuit. Fig. 19 shows signal waveforms of video signal recorded and reproduced by a conventional VTR and Fig. 20 is a block diagram showing a detection circuit of a TV receiver, for detecting as high definition video signal identification signal.

In the television signal processing system according to the third embodiment of the present invention, a video signal of PAL plus system having a high definition video signal of 16 : 9 aspect ratio picture is transmitted (transmitted/received or recorded/reproduced), and a high definition video signal identification signal 220d for identifying a high definition video signal is inserted independently into an effective video region 220A of a specific horizontal line (for example, 23rd line) of the high definition video signal. And further, the television signal processing system is compatible with the PAL broadcast system in recording/reproducing by VTRs.

First, a video signal portion 220 having a signalling bit in an encoded video signal (for example, a broadcast signal) which is a high definition video signal of PAL plus system, will be described. As shown in Fig. 16 the video signal portion 220 contains as a signal format that in each video frame (625H) and following to a horizontal synchronizing signal 220a of 23rd H (H is a horizontal line), a color burst signal 220b and an effective video region 220A are provided in this sequence. And a signalling bit signal 220c of 40 bits for example, a high definition video signal identification signal 220d which is a single frequency burst signal having a frequency 4.43 MHz and an amplitude AA equal to those of the color burst signal 220b, are inserted in the effective video region 220A in this sequence.

Although, in this embodiment, the high definition video signal identification signal 220d is adapted to be the single frequency burst signal having the frequency (4.43 MHz) and the amplitude AA equal to those of the color burst signal 220b, its amplitude and phase may be any as far as its frequency is same as that of the color burst signal 220b.

The inserted position of the high definition video signal identification signal 220d in the effective video region 220A, is after the signalling bit signal 220c in this example. However, the position may be any in the effective video region 220A except the position of the signalling bit signal 220c. For example, it may be inserted in between the color burst signal 220b and the signalling bit signal 220c.

For convenience, it is described that the high definition video signal identification signal 220d has an amplitude AA and the inserting position is after the signalling bit signal 220c. Incidentally, a helper signal in a broadcast signal is modulated with the "u" component of the color burst signal 220b upon encoding and its maximum amplitude is same as that of the color burst signal 220b. Further, various additional information including an identification signal for an picture aspect ratio etc. are included in the signalling bit signal 220c.

Considering a case where a broadcast signal having such a signal format is recorded and reproduced by a current VTR, a helper signal of a video signal (broadcast signal) encoded according to the basic encoding algorithm A is AM-modulated at the same frequency as that of the color burst signal and, therefore, it is essentially a luminance signal in nature. However, a substantial portion of its energy is processed as if a color signal upon the Y/C separation in a recording system of the current VTR as mentioned previously.

Thus, a luminance signal and a color signal related to a main signal and the helper signal which are Y/C separated are transformed into an FM modulated luminance signal and a low frequency converted color signal in the known luminance/color signal recording system of the VTR and these signals are frequency-multiplexed to be a recording video signal which is sequentially recorded on a recording medium.

A reproducing system of the current VTR sequentially reproduces from the recorded video signal the luminance signal and the color signal related to the main and helper signals by a known luminance/color signal reproducing system of the current VTR to obtain a reproduced video signal.

Fig. 17 shows a construction of a luminance/color signal reproducing system of a current VTR. As shown in Fig. 17, a reproducing system 230 is composed of a luminance signal reproducing system 231 and a color signal reproducing system 232.

The luminance signal reproducing system 231 which picks up only the FM signal and reproduces the luminance signal by FM-demodulating it, has a similar construction to that of a luminance signal reproducing system of a known VTR. And the luminance signal reproducing system 231 comprises a high-pass filter circuit, a drop-out compensation circuit, a limiter circuit, an FM-demodulator circuit, a low-pass filter circuit, a de-emphasis circuit and a noise removing circuit (all of which are not shown) connected in the order from its input to output.

The color signal reproducing system 232 has a similar construction to that of a color signal reproducing system of a known VTR, and functions to reproduce a color signal carrier of 3.58 MHz by frequency conversion of the low frequency converted color signal in the reproduced signal and removes respective distortions generated during reproduction and a cross talk component from adjacent tracks. The color signal reproducing system 232 comprises a low-pass filter circuit 233, an ACC circuit 234, a frequency converter circuit 235, a band-pass filter circuit 236, a burst signal attenuating circuit 237, a cross talk removing circuit 238, a burst signal separator circuit 239, a phase comparator circuit 247, a variable crystal oscillator circuit 241, a sub-frequency converter circuit 242, a phase shifter circuit 243, a VC0 circuit 244 and a horizontal synchronizing signal separator circuit 245, as shown in Fig. 17. In Fig. 17, 246 denotes a Y/C mixing circuit.

The cross talk removing circuit 238 for removing the cross talk from adjacent tracks is composed of a 2H delay line 238a for delaying an output signal of the burst signal attenuator circuit 237, a subtractor circuit 238b for outputting a subtracted signal obtained by subtracting an output of the 2H delay line 238a from the output of the burst signal attenuator circuit 237 and an amplitude control circuit 238c for controlling an amplitude A of the subtracted signal from the subtraction circuit 238b to 1/2 AA, as shown in Fig. 18.

The high definition video identification signal 220d shown in Fig. 16 is inserted into only the effective video region 220A, for example, the 23rd H line in each frame (625H). Therefore, it has no vertical correlation (see a video signal 221 shown in Fig. 19(A)) to adjacent lines (for example, 22nd H and 24th H lines) , and thus the amplitude of the high definition video identification signal 220d recorded and reproduced by a VTR becomes 1/2 of the amplitude AA. that is 1/2 of the amplitude AA of the color burst signal 220b, of the high definition video identification signal 220d which is the video signal 221 before recorded and reproduced by the VTR, as shown by a video signal 222 shown in Fig. 19(B). The amplitude control circuit 238c operates only during a period in which the high definition video signal identification signal 220d is inserted into the horizontal line (23rd H line) and does not operate during other periods to pass the signal without the amplitude control.

A PAL plus system compatible TV receiver to which the luminance and color signals (or a composite video signal) reproduced by the VTR having the above mentioned luminance signal reproducing system 231 and the color signal reproducing system 232 detects the amplitude level (1/2 AA) of the high definition video signal identification signal 220d by means of the high definition video identification signal detector circuit 240 provided in the PAL plus system compatible TV receiver and having a construction shown in Fig. 20.

The PAL plus system compatible TV receiver, when detects the amplitude level (1/2 AA) of the high definition video signal identification signal 220d supplied thereto, identifies that a video signal recorded and reproduced by the current VTR is supplied with and stops the decoding operation on the TV receiver side. Thus, it is possible to remove the defect of degradation of image quality.

Further, the PAL plus system compatible TV receiver, when detects the amplitude level AA of the high definition video signal identification signal 220d supplied thereto, identifies that the supplied video signal is a broadcast signal thus is not a video signal recorded and reproduced by the current VTR and continues the operation of the decoder circuit to improve resolution of an image on a screen by using the helper signal to thereby substantially enhance the resolution so that the full size image e of the main signal having improved vertical resolution can be observed.

The high definition video identification signal detector circuit 240 of the PAL plus system compatible TV receiver includes a band-pass filter circuit 240a, an absolute value detector circuit 240b, a comparator 240c, an identification signal detector circuit 240d, a horizontal synchronizing signal separator circuit 240e and a timing pulse generator circuit 240f, as shown in Fig. 20.

The band-pass filter circuit 240a derives the color burst signal 220b having a 4.43 MHz component and the high definition video signal identification signal 220d from the video signal 222 (Fig. 19(B)) supplied thereto and supplies them to the absolute value detector circuit 240b. The absolute value detector circuit 240b clamps these signals to a predetermined potential to obtain a DC signal which is supplied to one input of the comparator 240c. The comparator 240c having the other input being supplied with a reference potential V, compares the DC signal potential with the reference potential and supplies a resultant comparison signal to the identification signal detector circuit 240d. The comparison signal has a signal portion corresponding to the amplitude AA of the color burst signal 220b, but has no signal portion corresponding to the amplitude 1/2 AA of the high definition video signal identification signal 220d. The identification signal detection circuit 240d identifies the high definition video signal identification signal 220d included in the comparison signal outputted from the comparator 240c during a period in which the timing pulse generated by the timing pulse generator circuit 240f correspondingly with the insertion position of the high definition video signal identification signal 220d in the specific horizontal line (23rd H line) of the horizontal synchronizing signal from the horizontal synchronizing signal separator circuit 240e, is supplied. The identification signal detection circuit 240d outputs an identified result of "0", with which it is detectable that the high definition video identification signal 220d of the current VTR is present. This result of this identification is supplied to a decoder circuit which is not shown to stop its decoding operation.

When a broadcast signal (Fig. 19(A)) is supplied to the band-pass filter circuit 240a, it derives the color burst signal 220b having a 4.43 MHz component and the high definition video identification signal 220d from the video signal and supplies them to the absolute value detector circuit 240b. The absolute value detector circuit 240b clamps these signals to a predetermined potential to obtain a DC signal which is supplied to one input of the comparator 240c. The comparator 240c compares it with the reference potential V and supplies a resultant comparison signal to the identification signal detector circuit 240d. The comparison signal has a signal portion corresponding to the amplitude AA of the color burst signal 220b, and has a signal portion corresponding to the amplitude AA of the high definition video signal identification signal 220d. The identification signal detection circuit 240d identifies the high definition video signal identification signal 220d included in the comparison signal supplied from the comparator 240c during a period in which the timing pulse from the timing pulse generator circuit 240f is supplied, and outputs an identified result of "1" with which it is detectable that the high definition video identification signal 220d of the broadcast signal is present. This result of the identification is supplied to a decoder circuit which is not shown to continue its decoding operation.

As described in the foregoing, in the television signal processing system according to the present invention, a high definition video signal having a picture aspect ratio different from that of a predetermined broadcast system is transmitted, and the system has a compatibility with the broadcast system, and a high definition video signal identification signal required for identifying the high definition video signal is provided independently in an effective video signal region of a specific horizontal line of the high definition video signal. Accordingly, it is possible to transmit the high definition video signal to a receiving side together with the high definition video identification signal.

By utilizing the high definition video signal identification signal, when a high definition video signal of such as PAL plus system is recorded and reproduced by a PAL system compatible VTR and the reproduced high definition video signal is supplied to a PAL plus system compatible TV receiver, a possible degradation of image quality due to the distortions described in the foregoing is prevented by making its video signal processing operation (decoding operation) inoperative in response to the high definition video signal identification signal.

Further, when the high definition video signal is directly supplied as a broadcast signal to the high definition video signal compatible TV receiver of such as PAL plus system without going through a VTR, it is possible to display a high definition image by operating the high definition video processing operation (decoding process) since such broadcast signal does not contain distortions which may otherwise be generated during recording and reproducing operation in the VTR.

## Claims

1. A television signal processing system for performing a signal processing responsive to a signal configuration of television signal selectively determined from a number of television signals including an EDTV signal which contains a picture signal indicative of image information and an auxiliary signal related to the picture signal, the auxiliary signal being time-division multiplexed with the picture signal, comprising:
detection means for detecting an input television signal supplied from a television signal recording and/or reproducing apparatus; and
television signal processing means for processing only the input television signal with the auxiliary signal being in base-band frequency when said detection means detects the input television signal as being supplied from said television signal recording and/or reproducing apparatus, and said television signal processing means processes the input television signal with the auxiliary signal being modulated or encoded when said detection means detects the input television signal as being supplied from other source than said television signal recording and/or reproducing apparatus.

2. A television signal processing system for processing an EDTV signal containing a picture signal indicative of image information and an auxiliary signal related to the picture signal, the auxiliary signal being time-division multiplexed with the picture signal, comprising:
signal configuration identification means for producing an identification signal upon identifying a signal configuration of various television signals to be received, said television signals including the EDTV signal; and
television signal processing means including an enhancement circuit which outputs an enhanced television signal obtained by enhancing the picture signal with said auxiliary signal in response to said identification signal when said identification signal indicates said EDTV signal.

3. A television signal processing system claimed in claim 2, wherein said television signal processing means performs a processing operation without an enhancement using the auxiliary signal inserted within a predetermined time period at a rear portion of a field of the EDTV signal, when the EDTV signal is supplied from a television signal recording and/or reproducing apparatus.

4. A television signal processing system claimed in claim 1, wherein the EDTV signal contains a color burst signal and an identification signal for identifying said EDTV signal being a high definition video signal, said identification signal having a frequency equal to a frequency of the color burst signal and being inserted into an effective video region of a specific horizontal scanning line of the EDTV signal, and wherein said television signal processing system further comprises detection means for detecting said identification signal.

5. A television signal processing system claimed in claim 4, wherein said detection means comprises deriving means for deriving said color burst signal and said identification signal, DC potential producing means for producing a DC potential from said color burst signal and said identification signal derived from said deriving means, comparison means for comparing said DC potential with a reference potential, timing pulse generating means for generating a timing pulse correspondingly with a timing at which said identification signal is inserted into the effective video region of the specific horizontal scanning line, and identification signal detection means for identifying said identification signal in response to said timing pulse and outputting an identified result as a signal.
